(19) **Europäisches Patentamt / European Patent Office / Office européen des brevets**

(11) **EP 4 600 877 A1**

(12) # EUROPEAN PATENT APPLICATION
published in accordance with Art. 153(4) EPC

(43) Date of publication:
**13.08.2025 Bulletin 2025/33**

(21) Application number: **23939171.7**

(22) Date of filing: **06.09.2023**

(51) International Patent Classification (IPC):
**G06Q 10/0631** (2023.01)

(52) Cooperative Patent Classification (CPC):
**G06N 3/006; G06Q 10/0631; G06Q 50/04**

(86) International application number:
**PCT/CN2023/117332**

(87) International publication number:
**WO 2024/244196 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.05.2023 CN 202310636658**

(71) Applicant: **Boe Technology Group Co., Ltd.**
**Beijing 100015 (CN)**

(72) Inventors:
 • **ZHANG, Ning**
  **Beijing 100176 (CN)**
 • **FAN, Lin**
  **Beijing 100176 (CN)**
 • **HAO, Jifang**
  **Beijing 100176 (CN)**
 • **GUAN, Rui**
  **Beijing 100176 (CN)**
 • **WEN, Jinxiao**
  **Beijing 100176 (CN)**
 • **ZHAO, Peng**
  **Beijing 100176 (CN)**
 • **YANG, Zhuoshi**
  **Beijing 100176 (CN)**
 • **CHU, Xiao**
  **Beijing 100176 (CN)**

(74) Representative: **Potter Clarkson**
 **Chapel Quarter**
 **Mount Street**
 **Nottingham NG1 6HQ (GB)**

(54) **PRODUCTION SCHEDULING METHOD AND SYSTEM, AND ELECTRONIC DEVICE AND STORAGE MEDIUM**

(57) A method of scheduling a production, a system (700) of scheduling a production, an electronic device and a storage medium are provided, which may be applied to fields of a computer technology, an artificial intelligence technology and a production scheduling technology. The method of scheduling a production includes: receiving (S610), by a logic processing module (702), configuration information from a display control module (701), and generating a batch identifier according to the received configuration information; acquiring (S620), by a production scheduling algorithm module (703), production scheduling data related to the batch identifier from a database module (704), invoking a pro-duction scheduling algorithm adapted to the configuration information to perform production scheduling according to the production scheduling data, so as to generate a production scheduling result, and storing the production scheduling result in association with the batch identifier in the database module (704); periodically acquiring (S630), by the logic processing module (702), a latest production scheduling result from the database module (704), and sending the latest production scheduling result to the display control module (701); and displaying (S640), by a display control module (701), the production scheduling result provided by the logic processing module (702).

**(Cont. next page)**

EP 4 600 877 A1

600

A logic processing module receives configuration information from a display control module, and generates a batch identifier according to the received configuration information — S610

A production scheduling algorithm module acquires production scheduling data related to the batch identifier from a database module, invokes a production scheduling algorithm adapted to the configuration information to perform production scheduling according to the production scheduling data, so as to generate a production scheduling result, and stores the production scheduling result in association with the batch identifier in the database module — S620

The logic processing module periodically acquires a latest production scheduling result from the database module, and sends the latest production scheduling result to the display control module — S630

A display control module displays the production scheduling result provided by the logic processing module. — S640

FIG. 6

**Description**

This application claims priority to Chinese Patent Application No. 202310636658.0, filed on May 31, 2023, the entire content of which is incorporated herein by reference in its entirety.

TECHNICAL FIELD

The present disclosure relates to fields of a computer technology, an artificial intelligence technology and a production scheduling technology, and more specifically, to a method of scheduling a production, an apparatus of scheduling a production, an electronic device, a storage medium and a program product.

BACKGROUND

With an advancement of an intelligent and flexible workshop, a workshop data volume (e.g., the number of products, processing devices, etc.) is becoming larger and larger, a production process (e.g., a processing step of a workpiece to be processed, etc., the processing step may also be referred to as a production step, and a production of a product is usually completed through a series of production steps) is becoming more and more complex, and there are more and more workshop production indicators (e.g., a total processing time to complete a processing of each product in the workshop, a production efficiency, a device capacity and a device utilization rate, etc. When using different production scheduling sequences for production scheduling, various production indicators may be affected.

In the related art, a substantial computational time is required to determine a production scheduling sequence that satisfies some of the production indicators. A slow computation speed makes it difficult to determine the production scheduling sequence that simultaneously satisfies each production indicator, thereby failing to satisfy a production scheduling efficiency. Therefore, how to quickly determine the production scheduling sequence that satisfies all production indicators has become a technical problem necessary to be solved in the present disclosure.

SUMMARY

In view of the above-mentioned problems, the present disclosure provides a method of scheduling a production, a system of scheduling a production, an electronic device and a storage medium.

According to an aspect of the present disclosure, a method of scheduling a production is provided, including: receiving, by a logic processing module, configuration information from a display control module, and generating a batch identifier according to the received configuration information; acquiring, by a production scheduling algorithm module, production scheduling data related to the above-mentioned batch identifier from a database module, invoking a production scheduling algorithm adapted to the above-mentioned configuration information to perform production scheduling according to the above-mentioned production scheduling data, so as to generate a production scheduling result, and storing the above-mentioned production scheduling result in association with the above-mentioned batch identifier in the database module; periodically acquiring, by the logic processing module, a latest production scheduling result from the database module, and sending the latest production scheduling result to the display control module; and displaying, by the display control module, the production scheduling result provided by the above-mentioned logic processing module.

According to another aspect of the present disclosure, a system of scheduling a production is provided, including: a logic processing module configured to receive configuration information from a display control module, generate a batch identifier according to the received configuration information, and periodically acquire a latest production scheduling result from a database module and send the latest production scheduling result to the display control module; a production scheduling algorithm module configured to acquire production scheduling data related to the above-mentioned batch identifier from the database module, invoke a production scheduling algorithm adapted to the above-mentioned configuration information to perform production scheduling according to the above-mentioned production scheduling data, so as to generate a production scheduling result, and store the above-mentioned production scheduling result in association with the above-mentioned batch identifier in the database module; and the display control module configured to display the production scheduling result provided by the above-mentioned logic processing module.

According to another aspect of the present disclosure, an electronic device is provided, including a memory and a processor, where the above-mentioned memory is configured to store instructions executable by the above-mentioned processor, and the above-mentioned instructions, when executed by the processor, are configured to cause the above-mentioned processor to implement the method described in the present disclosure.

According to another aspect of the present disclosure, a non-transitory computer-readable storage medium having computer instructions stored thereon is provided, where the above-mentioned computer instructions are configured to cause the above-mentioned computer to implement the method described in the present disclosure.

According to another aspect of the present disclosure, a computer program product is provided, including a computer program, and the above-mentioned computer program, when executed by a processor, is configured to implement the method described in the present disclosure.

It should be understood that the content described in this section is not intended to identify key or important features in embodiments of the present disclosure, nor is it intended to limit the scope of the present disclosure. Other features of the present disclosure will be easily understood through the following description.

BRIEF DESCRIPTION OF THE DRAWINGS

In order to clearly describe the technical solutions of the present disclosure, accompanying drawings required in embodiments of the present disclosure will be briefly introduced below. Obviously, the accompanying drawings in the following descriptions are for some of embodiments of the present disclosure. For those ordinary skilled in the art, other accompanying drawings may also be obtained according to these accompanying drawings without any creative work.

FIG. 1 shows a first schematic flowchart of a method of scheduling a production provided by embodiments of the present disclosure;

FIG. 2 shows a first schematic scenario diagram of a method of scheduling a production provided by embodiments of the present disclosure;

FIG. 3 shows a second schematic flowchart of a method of scheduling a production provided by embodiments of the present disclosure;

FIG. 4A shows a schematic architectural diagram of a system for implementing a method of scheduling a production provided by embodiments of the present disclosure ;

FIG. 4B shows a second schematic scenario diagram of a method of scheduling a production according to embodiments of the present disclosure ;

FIG. 4C shows a third schematic scenario diagram of a method of scheduling a production provided by embodiments of the present disclosure ;

FIG. 4D shows a fourth schematic scenario diagram of a method of scheduling a production provided by embodiments of the present disclosure ;

FIG. 4E shows a fifth schematic scenario diagram of a method of scheduling a production provided by embodiments of the present disclosure;

FIG. 5 shows a schematic structural diagram of an apparatus of scheduling a production provided by embodiments of the present disclosure;

FIG. 6 schematically shows a flowchart of a method of scheduling a production according to embodiments of the present disclosure;

FIG. 7 schematically shows a schematic architectural diagram of a system for implementing a method of scheduling a production according to embodiments of the present disclosure;

FIG. 8 schematically shows an example schematic diagram of a process of providing a production scheduling result to a display control module based on a polling method according to embodiments of the present disclosure;

FIG. 9 schematically shows an example schematic diagram of a process of providing a production scheduling result to a display control module based on a push method according to embodiments of the present disclosure;

FIG. 10 schematically shows an example schematic diagram of a display control interface according to embodiments of the present disclosure;

FIG. 11A schematically shows an example of a Gantt chart displayed by a method of scheduling a production according to embodiments of the present disclosure;

FIG. 11B schematically shows an example of a method of displaying a Gantt chart according to embodiments of the present disclosure; and

FIG. 12 shows a schematic structural diagram of an electronic device provided by embodiments of the present disclosure.

## DETAILED DESCRIPTION OF EMBODIMENTS

The technical solutions of embodiments of the present disclosure will be clearly and completely described below in combination with accompanying drawings in embodiments of the present disclosure. Obviously, the described embodiments are some, but not all of embodiments of the present disclosure. Based on the described embodiments of the present disclosure, all other embodiments obtained by those ordinary skilled in the art without any creative work fall within the scope of protection of the present disclosure.

In view of the problems that determination of a production scheduling sequence satisfying all production indicators is highly time-consuming, thereby failing to satisfy a production scheduling efficiency, embodiments of the present disclosure provide a method of scheduling a production, which may be implemented by any electronic device. The electronic device may be a server device or a terminal device, or an apparatus or chip integrated on these devices, which will not be limited in embodiments of the present disclosure.

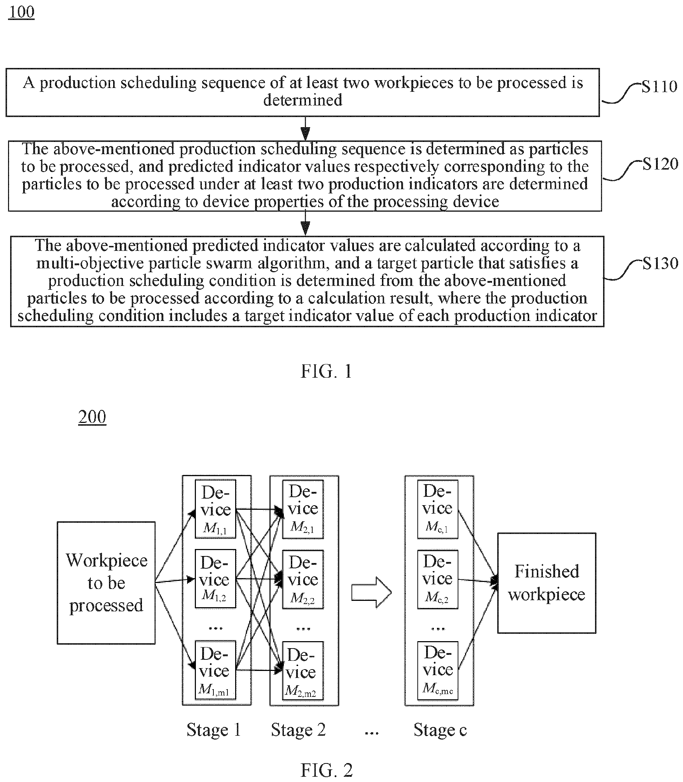

Referring to FIG. 1, a method of scheduling a production provided by embodiments of the present disclosure may include the following steps S101 to S103.

In the step S101, a production scheduling sequence of at least two workpieces to be processed is determined.

The workpiece to be processed may include, but will not be limited to, a raw material or semi-finished product that may be obtained by processing, etc., which will not be limited. In embodiments of the present disclosure, the specific number of the workpieces to be processed is not specifically limited and may be determined according to actual conditions.

When processing the workpiece to be processed, processing steps of the workpiece to be processed may be set according to a specific processing stage. Each processing stage is a processing step. For the convenience of description below, the processing stage is also referred to as a processing step or a production step. The processing time required for each processing step may be determined according to an empirical value or experimental value, which is generally a fixed value. In embodiments of the present disclosure, in order to distinguish from the workpiece to be processed, a workpiece that has been subjected to all processing operations may be referred to as a finished workpiece, that is, a product corresponding to the workpiece to be processed. In other words, the workpiece to be processed is a semi-finished product in a process of producing a product, and a production step of the workpiece to be processed may be regarded as a production step of the product, or as a sub-step of a production step of the product. For the convenience of description below, the processing of the workpiece to be processed is also referred to as a production of the product.

Combined with specific scenario embodiments shown in FIG. 2, the processing process in the workshop will be more clearly explained. As shown in FIG. 2, when performing a processing operation on workpieces in the workshop, the workshop may include n workpieces to be processed, and a continuous processing is required in c ($c \geq 2$) processing stages to obtain finished workpieces corresponding to the workpieces to be processed, and at least one processing stage is equipped with at least two processing devices. The processing device is used to perform a corresponding processing step. For the convenience of description below, the processing device is also referred to as a production device or station. Assuming that a processing stage i is equipped with $m_i$ processing devices, one processing device may be selected from the $m_i$ processing devices to perform the processing operation of the processing stage i on the workpiece to be processed.

In the scenario embodiment, when performing the processing operation on the workpieces, there are at least the following processing conditions 1 to 8.

Condition 1: For each processing stage, the processing operation corresponding to the processing stage may only be performed on a designated processing device; and for each workpiece, the processing operation corresponding to the processing stage may only be started on the workpiece after completing the processing operation corresponding to a previous processing stage of the processing stage on the workpiece.

Condition 2: At a certain moment, only one job (i.e., a processing operation corresponding to a processing stage of a workpiece) may be performed by one processing device.

Condition 3: Each job may only be processed once on one processing device.

Condition 4: The processing stages required to complete each workpiece and the processing time required to perform the processing operation corresponding to each processing stage are known. For a workpiece, the processing steps corresponding to the processing stages thereof will not be changed.

Condition 5: When a switching processing (i.e., after processing a first workpiece to be processed, processing another workpiece to be processed) is performed on different types of workpieces to be processed by using a same processing device, a time cost is required, and a frequent switching may affect a yield of the finished workpiece.

Condition 6: During each production scheduling, there may be semi-finished products in the workshop that have entered or are in a buffer zone.

Condition 7: A processing device in a maintenance plan may be in a state of temporarily unavailable for scheduling.

Condition 8: Different types of finished workpieces have different delivery time and dispersed delivery dates; and the different types of finished workpieces may be delivered in different quantities at different delivery dates and delivered in batches.

It should be noted that, for each workpiece to be processed, the workpiece to be processed may correspond to a processing stage or a plurality of processing stages, which will not be limited in embodiments of the present disclosure. When the workpiece to be processed corresponds to a plurality of processing stages, there are corresponding processing steps between the processing stages.

For example, when a workpiece is an iron block, and a screw is obtained by performing a processing step of three processing operations including turning processing, forging processing and cold heading on the iron block, the turning may be regarded as the processing operation corresponding to a first processing stage of the workpiece, the forging processing may be regarded as the processing operation corresponding to a second processing stage of the workpiece, and the cold heading may be regarded as the processing operation corresponding to a third processing stage of the workpiece.

Specifically, during the processing, when the iron block (i.e., a raw material) is regarded as a workpiece to be processed in the first processing stage, a workpiece to be processed in the second processing stage is obtained by performing the processing operation (turning processing) corresponding to the first processing stage on the sub-workpiece to be processed in the first stage; a workpiece to be processed in the third processing stage is obtained by performing the processing operation (forging processing) corresponding to the second processing stage on the workpiece to be processed in the second processing stage; and a finished workpiece, i.e., a product (i.e., screw) corresponding to the iron block, is obtained by performing the processing operation (cold heading) corresponding to the third processing stage on the workpiece to be processed in the third processing stage.

The production scheduling sequence of at least two workpieces to be processed is a processing sequence obtained after random initialization based on workpiece identifiers of the workpieces to be processed, which will not be limited in embodiments of the present disclosure.

As an example, a workpiece group includes 5 workpieces, including: workpiece 1, workpiece 2, workpiece 3, workpiece 4, and workpiece 5. A corresponding initialization scheduling sequence may be: workpiece 1 → workpiece 2 → workpiece 3 → workpiece 4 → workpiece 5, or workpiece 4 → workpiece 3 → workpiece 2 → workpiece 5 → workpiece 1, etc.

In order to obtain a more accurate production scheduling sequence, so as to shorten search time and converge quickly, improve a speed of determining a final production scheduling sequence, and meet development requirements of intelligent and flexible workshops, in embodiments of the present disclosure, the production scheduling sequence may be initialized in combination with an actual production mode, for example, at least one of the number, the processing steps, the delivery time of the workpieces to be processed, etc., so as to obtain the production scheduling sequence. The methods of initializing the production scheduling sequence may specifically include the following methods 1 to 3.

Method 1: Taking the production scheduling initialization based on a type of the workpiece to be processed, a sequence of the processing steps of the workpiece to be processed and the number of workpieces to be processed as an example, the production scheduling sequence of all workpieces to be processed may be randomly set on the premise of ensuring the sequence of the processing steps (i.e., performing random initialization of part of the production scheduling sequence).

As an example, the workpiece group includes 5 workpieces, including: workpiece 1, workpiece 2, workpiece 3, workpiece 4, and workpiece 5. Except for the workpiece 2 which is implemented through three processing stages a, b, c with a processing sequence (i.e., workpieces to be processed of the workpiece 2 may be expressed as workpiece 2a → workpiece 2b → workpiece 2c), and the remaining workpieces may be implemented through a processing stage. Therefore, the production scheduling sequence may be obtained as: workpiece 4 → workpiece 2a → workpiece 3 → workpiece 2b → workpiece 5 → workpiece 2c → workpiece 1. In the production scheduling sequence, the processing sequence of the workpiece 2 has not changed.

Method 2: Taking the production scheduling initialization based on a type of the workpiece to be processed, a sequence of the processing steps of the workpiece to be processed, the number of workpieces to be processed, and a batch continuity of the same product as an example, the production scheduling sequence of all workpieces to be processed may be randomly set on the premise of ensuring the batch continuity and the processing sequence of the same product (i.e., performing continuous initialization of some particles).

As an example, the workpiece group includes 5 workpieces, including: workpiece 1, workpiece 2, workpiece 3, workpiece 4, and workpiece 5. Except for the workpiece 2 which is implemented through three processing stages a, b, c with a sub-processing sequence (i.e., workpieces to be processed of the workpiece 2 may be expressed as workpiece 2a → workpiece 2b → workpiece 2c), the remaining workpieces may be implemented through a processing stage. Therefore, an initial production scheduling sequence may be obtained as: workpiece 4 → workpiece 3 → workpiece 2a → workpiece 2b → workpiece 2c → workpiece 5 → workpiece 1. In the production scheduling sequence, the processing sequence of the workpiece 2 has not changed, and each processing stage is continuous.

Method 3: Taking the production scheduling initialization based on a type of the workpiece to be processed, a sequence of the processing steps of the workpiece to be processed, the number of workpieces to be processed, and a batch continuity and delivery time of the same product as an example, the production scheduling sequence may be set on the premise of ensuring a sequence of delivery time, a quantity of each delivery, the batch continuity of the same product and a sequence of steps (i.e., performing delivery date sequence initialization of some particles).

As an example, the workpiece group includes 5 workpieces, including: workpiece 1, workpiece 2, workpiece 3, workpiece 4, and workpiece 5. Except for the workpiece 2 which is implemented through three processing stages a, b, and c with a sub-processing sequence (i.e., workpieces to be processed of the workpiece 2 may be expressed as workpiece 2a → workpiece 2b → workpiece 2c), the remaining workpieces may be implemented through a processing stage, and the sequence of the delivery time of the workpieces is: workpiece 2 → workpiece 3 → workpiece 1 → workpiece 5 → workpiece 4. Therefore, the initial production scheduling sequence may be obtained as: workpiece 2a → workpiece 2b → workpiece 2c → workpiece 3 → workpiece 1 → workpiece 5 → workpiece 4. In the production scheduling sequence, the processing sequence of the workpiece 2 has not changed, the processing stages of the workpiece 2 are continuous, and the delivery may be guaranteed according to the sequence of the delivery time.

Optionally, different methods of initializing the production scheduling sequence may be combined to determine the production scheduling sequence. For example, the production scheduling sequence may be determined by the method 1, the method 2, and the method 3 respectively in a ratio of the number of scheduling sequences corresponding to the method 1: the number of scheduling sequences corresponding to the method 2: the number of scheduling sequences corresponding to the method 3 = 3:3:4 according to a total number of workpieces of each workpiece type in the workshop.

It should be noted that, in order to improve a production efficiency of the workshop, the workpieces in the workshop may also be divided based on the number of workpieces that may be processed simultaneously by the processing device and the number of workpieces of each workpiece type processed in the workshop, so as to realize a batch processing operation of the same processing stage for each workpiece in the same workpiece group.

As an example, taking workpieces of 5 different workpiece types, A, B, C, D, and E, which may be produced in the same workshop as an example, if the total number of workpieces to be processed in the workshop is 80, in which the numbers of workpieces processed corresponding to the workpiece type A, the workpiece type B, the workpiece type C, the workpiece type D, and the workpiece type E are 10, 15, 10, 20 and 15, respectively, based on the number (e.g., 5) of workpieces that may be processed simultaneously by the processing device in the workshop each time and the number of workpieces processed of each workpiece type, the workpieces in the workshop may be divided into 14 workpiece groups (i.e., 14 batches), i.e., the workpieces of the workpiece type A are divided into two workpiece groups A1 and A2, the workpieces of the workpiece type B are divided into three workpiece groups B1, B2 and B3, the workpieces of the workpiece type C are divided into two workpiece groups C1 and C2, the workpieces of the workpiece type D are divided into four workpiece groups D1, D2, D3 and D4, and the workpieces of the workpiece types are divided into three sub-workpiece groups E1, E2 and E3.

In the step S102, the above-mentioned production scheduling sequence is determined as particles to be processed, and predicted indicator values respectively corresponding to the particles to be processed under at least two production indicators are determined according to device properties of the processing device.

In embodiments of the present disclosure, after determining the particles to be processed (i.e., the production scheduling sequence), position information, speed information, and weight information of the particles to be processed may also be initialized. The position information represents the particles to be processed themselves (e.g., an initial position of each particle to be processed may be determined based on determination of a sequence of the production scheduling sequences), the speed information is a movement speed in a multi-particle space, and the weight information is consistent with the position information. The superior-positioned particles to be processed also have larger weight information.

The device properties of the processing device may include the number of processing device of different processing types, a working status (e.g., the processing device may be scheduled, may not be scheduled, or temporarily may not be scheduled) of the processing device, a processing operation that may be performed by the processing device, etc.

The production indicators may include, but are not limited to, a total completion time of all workpieces, a processing continuity of the device (i.e., minimizing frequent switching of workpiece types processed by the same device), delivery time, etc.

When determining the predicted indicator values respectively corresponding to the above-mentioned particles to be processed under at least two production indicators according to device properties of the processing device, the predicted indicator values of the corresponding particles to be processed under each production indicator may be determined respectively based on each production indicator when each workpiece to be processed in the particles to be processed is processed by using each processing device.

When it is determined that a corresponding time period for a corresponding processing device is selected for each step (a job) of a workpiece, a selectable processing device corresponding to each step of each workpiece may be first determined based on the processing operations that may be performed by the processing device. Combined with completion time of a previous step of the workpiece, processing time of the current step, and changing time between the previous job and the current job of the selectable processing device, the processing device corresponding to the workpiece and an available time period of the processing device are determined from the selectable processing device, and then the operation is repeated until the selection of the processing device is completed for all operations.

Optionally, if it may be determined that a plurality of processing devices may perform a processing operation on a step of a certain workpiece, the earliest available processing device may be selected from the processing device.

In the step S103, the above-mentioned predicted indicator values are calculated according to a multi-objective particle swarm algorithm, and a target particle that satisfies a production scheduling condition is determined from the above-mentioned particles to be processed according to a calculation result, where the production scheduling condition includes a target indicator value of each production indicator.

It may be understood that the target indicator value may be a specific numerical value, a numerical range or a relative value, which will not be limited in embodiments of the present disclosure.

Optionally, corresponding to the production indicator of completion time, the production scheduling condition may include: minimum maximum completion time. That is, after determining the maximum completion time of each particle to be processed, the minimum value of the maximum completion time of each particle to be processed is determined as the minimum maximum completion time, and the corresponding particle to be processed is the particle that satisfies the production scheduling condition.

For each particle to be processed, when determining the maximum completion time of the particle to be processed, the processing device and available time period for executing the particle to be processed may be first determined, and then a sum of estimated execution time of each job in the particle to be processed and switching time of each processing device may be determined as the maximum completion time of the particle to be processed.

Optionally, corresponding to the production indicator of delivery time, the production scheduling condition may include: satisfying the delivery time of each workpiece to be processed.

Optionally, corresponding to the production indicator of switching continuity, the production scheduling condition may include: the shortest sum of switching time and the best switching continuity. That is, when processing each step in the particles to be processed, the sum of the switching time of each processing device is shortest, and a product switching amount corresponding to each processing device is the least (i.e., a same processing device processes processing operations of a same product as much as possible).

Optionally, after determining the predicted indicator values of each particle to be processed, the indicators may be normalized, and the particle to be processed that is closest to the production scheduling condition among the particles to be processed may be determined as the target particle. If there are a plurality of particles to be processed that are closest to the production scheduling condition, any particle to be processed among the particles to be processed that are closest to the production scheduling condition may be randomly determined as the target particle.

In embodiments of the present disclosure, by determining the production scheduling sequence of at least two workpieces to be processed and the production scheduling condition including the target indicator value of each production indicator, the determined production scheduling sequence is determined as the particles to be processed, and the predicted indicator values respectively corresponding to the particles to be processed under at least two production indicators are determined according to the device properties of the processing device; and the above-mentioned predicted indicator values are calculated according to the multi-objective particle swarm algorithm, and the target particle that satisfies the production scheduling condition is determined from the particles to be processed according to the calculation result, and the production scheduling sequence that satisfies all production indicators may be quickly determined, thereby improving the production scheduling efficiency.

Optionally, the determining the above-mentioned predicted indicator values according to a multi-objective particle swarm algorithm, and determining a target particle that satisfies a production scheduling condition from the above-mentioned particles to be processed according to a calculation result may include:

determining initial position information of the above-mentioned particles to be processed in a production indicator space according to the above-mentioned predicted indicator values, where a dimension of the production indicator space is used to represent the production indicator;

determining a particle crowding degree of the above-mentioned particles to be processed in the above-mentioned production indicator space according to the above-mentioned initial position information; and

determining the above-mentioned target particle according to the above-mentioned particle crowding degree.

In this implementation, each production indicator may be used as a dimension to construct the production indicator space, and the initial position information of the particles to be processed in the production indicator space may be determined according to the predicted indicator values of the particles to be processed corresponding to each production indicator.

It may be understood that the position information of the particle to be processed in the production indicator space may also be determined based on initialized position information of the particle to be processed; and after the predicted indicator value of the particle to be processed is determined, the position information of the particle to be processed in the production indicator space is adjusted to the initial position information.

After determining the initial position information of each particle to be processed, a spatial range formed by the initial position information of each particle to be processed may be divided into different grid spaces according to the initial position information of each particle to be processed, and the particle crowding degree of the particles to be processed may be determined according to the number of particles in the grid space to which the initial position information of each particle to be processed belongs.

Specifically, assuming that a total number of particles to be processed is 100, which are numbered 1, ..., 100 respectively, the spatial range formed by the initial position information of each particle to be processed may be divided into 10 grid spaces, and the particle crowding degree of the particles to be processed may be the number $x_1$, $x_2$, , ...$x_{100}$ of particles in the grid space where the particles to be processed are located.

Optionally, after determining the particle crowding degree of each particle to be processed, the particle to be processed with the lowest particle crowding degree may be determined as the target particle in consideration of a difficulty of screening each particle to be processed.

Optionally, the target particle may be determined based on the following particle crowding degree selection functions:

$$m_i = \frac{n_i}{\sum_{i=1}^{r} n_i}$$

$$n_i = \frac{10}{x_i^{\,3}}$$

In the functions, r represents a total number of particles to be processed, 10 is a constant. The specific value may be determined according to actual conditions. $m_i$ is a probability that the particle to be processed is determined as the target particle, and $n_i$ is an intermediate value.

After determining $m_i$, an accumulated value $sm_i = \sum_{j=1}^{i} m_j$ of the crowding selection function of the current particles to be processed may be calculated, and a random number between 0 and 1 may be randomly generated. If the random number is less than or equal to $sp_i$, the particle to be processed i is set as the target particle.

The target particle that satisfies the production scheduling condition may be quickly determined based on the particle crowding degree of the particles to be processed in the production indicator space.

Optionally, the determining the particle crowding degree of the particles to be processed in the above-mentioned production indicator space according to the initial position information may include:

determining target speed information of the above-mentioned particles to be processed;

updating the above-mentioned initial position information according to the above-mentioned target speed information, so as to obtain updated position information; and

re-determining the above-mentioned particle crowding degree according to the above-mentioned updated position information.

Optionally, the determining target speed information of the above-mentioned particles to be processed may include:

determining first position information of the above-mentioned particle to be processed according to a comparison result of current position information and historical position information of the above-mentioned particles to be processed;

determining second position information according to a comparison result of the current position information of all the above-mentioned particles to be processed and target position information, where the target position information is position information of the above-mentioned target indicator value in the production indicator space; and

updating the above-mentioned target speed information according to the above-mentioned current position information, the above-mentioned first position information and the above-mentioned second position information by using a preset speed information updating method.

Optionally, when performing a second iteration, the current position information of the particles to be processed is the same as the historical position information of the particles to be processed, i.e., the initial position information. According to the speed information and movement time of the particles to be processed and the current position information of the particles to be processed, the position information of the particles to be processed may be obtained by adding a product of the speed information and the movement time of the particles to be processed on the basis of the current position information of the particles to be processed, and the position information (i.e., position information that is closer to the target position information) satisfying the production scheduling condition between the current position information of the particles to be processed and position information to be processed is determined as the first position information.

When performing a third iteration, the obtained target speed information may be determined according to the above-mentioned target speed information determination method, and the current position information may be updated.

When determining the second position information, the position information closest to the target position information in the current position information of each particle to be processed may be determined as the second position information, i.e., the position information of the target particle in the previous iteration process.

Optionally, the target speed information may be determined by using the following preset speed information updating method:

$$V_i = \omega \times v_i + c_1 r_1 (pbest - p_i) + c_2 r_2 (gbest - p_i)$$

$v_i$ is current speed information, $p_i$ is the current position information of the particle to be processed, pbest is the first position information, gbest is the second position information, $\omega$ is an inertia coefficient (non-negative constant), $c_1$ and $c_2$ are acceleration constants used to adjust a learning step size, and $r_1$ and $r_2$ are random constants. Specific values of $\omega$, $c_1$, $c_2$, $r_1$ and $r_2$ may be determined according to actual conditions.

After determining the target speed information of the particle to be processed, the current position information of the particle to be processed may be updated according to the following method, so as to obtain the updated position information:

$$P_i = p_i + V_i$$

After updating the position information (i.e., predicted indicator value) of each particle to be processed is updated, the particle crowding degree may be iterated using the above-mentioned method, and the target particle may be re-determined based on the updated particle crowding degree.

In this implementation, the particle crowding degree may be iterated by updating the position information of each particle to be processed, and after determining the particle crowding degree, the target particle may be re-determined based on the updated particle crowding degree, so that the target particle that satisfies the production scheduling condition may be determined through a plurality of iterative calculations, thereby improving an accuracy of the determined target particle.

Optionally, the calculating the above-mentioned predicted indicator values according to the multi-objective particle swarm algorithm, and determining the target particle that satisfies the production scheduling condition from the particles to be processed according to the calculation result may include:

determining a target production indicator with the highest priority according to priorities of the above-mentioned at least two production indicators;

determining a sampling ratio of the particles to be processed according to the predicted indicator values of the particles to be processed under the above-mentioned target production indicator; and

sampling the above-mentioned target particle from the particles to be processed according to the sampling ratio.

Optionally, the determining a sampling ratio of the particles to be processed according to the predicted indicator values of the particles to be processed under the above-mentioned target production indicator may include:

determining the minimum value from the predicted indicator values of each particle to be processed under the above-mentioned target production indicator; and

determining the sampling ratio of the above-mentioned particles to be processed according to the minimum value and the predicted indicator values of the particles to be processed under the above-mentioned target production indicator.

In this implementation, the priority of each production indicator may be determined according to actual conditions. For example, the target production indicator with the highest priority may be determined as the completion time according to the priority of each production indicator.

If there is a production indicator with the highest priority, after determining the minimum value of the predicted indicator values of each particle to be processed under the production indicator, the production indicator may be determined as the target production indicator, and a subsequent operation may be performed according to the determined minimum value. If there are a plurality of production indicators with the highest priority, after determining the minimum values of the predicted indicator values of each particle to be processed under the above-mentioned production indicators with the highest priority, the maximum value among the minimum values may be determined, and the production indicator corresponding to the maximum value may be determined as the target production indicator, so as to perform the subsequent operation.

When determining the sampling ratio of the particles to be processed, a sum k of the predicted indicator values of each particle to be processed under the target production indicator may be determined, a first ratio of the predicted indicator value of the particle to be processed under the target production indicator to the sum of the predicted indicator values may be determined, and the sampling ratio of the particles to be processed may be determined as a ratio of the first ratio corresponding to the particle to be processed to k.

As an example, assuming that there are two particles to be processed, a and b, and the production scheduling condition may include a total completion time of all workpieces (i.e., target x), a processing continuity of the device (i.e., target y), and delivery time (i.e., target z), and the production indicators with the highest priority are target y and target z, after normalizing the predicted indicator values of the particles to be processed under each production indicator, the normalized predicted indicator values of the two particles to be processed may be obtained as: a[1, 0.5, 0.8], b[2, 0.6, 0.6].

The minimum values under the target y and the target z, i.e., y_min=0.5 (from particle a), z_min=0.6 (from particle b), may be determined by traversing the predicted indicator values of the two particles to be processed a and b under target y and target z respectively. The maximum value of y_min and z_min, i.e., z_min=0.6, may be determined, and it may be determined that the target z is the target that needs to be focused on in the iteration, i.e., the target production indicator. Then, the particles may be extracted in proportion according to values of 0.8 and 0.6 of the particles to be processed a and b under the target z respectively. k is sum(a, b)=0.8+0.6=1.4, 1[a]=1.4/0.8, 1[b]=1.4/0.6. Therefore, a sampling ratio corresponding to the particle to be processed a is 1[a]/k, and a sampling ratio corresponding to the particle to be processed b is 1[b]/k. The particle to be processed a and the particle to be processed b are sampled according to the sampling ratios corresponding to the particle to be processed a and the particle to be processed b, and the particle obtained by sampling is determined as the target particle.

It may be understood that the position information of each particle to be processed may also be updated according to the above-mentioned method, a normalization processing may be performed on the updated position information, and iteration may be performed based on the normalized predicted indicator value until the target particle is determined.

Optionally, before calculating the above-mentioned predicted indicator value according to the multi-objective particle swarm algorithm, the above-mentioned method may further include:

determining candidate particles among the above-mentioned particles to be processed according to a comparison result of the predicted indicator values of at least two of the particles to be processed;

where among the above-mentioned particles to be processed, predicted indicator values of the candidate particles are greater than predicted indicator values of the non-candidate particles.

Optionally, the determining candidate particles among the above-mentioned particles to be processed according to a comparison result of the predicted indicator values of at least two of the particles to be processed may include: screening, in a case that the number of the above-mentioned candidate particles is greater than a preset threshold, particles of which number is the preset threshold from the above-mentioned candidate particles based on a particle crowding degree of the candidate particles.

In this implementation, the candidate particles may be determined based on a Pareto dominance relationship by using a Pareto method. In the Parto dominance relationship (i.e., a dominance relationship of a decision vector and a dominance relationship of a target vector), if and only if X1 is not worse than X2 in all targets, and is strictly better than X2 in at least one target, that is, a decision vector X1 dominates another decision vector X2, and X1 may be regarded as a non-inferior solution, i.e., a dominant solution, and X2 may be regarded as a dominated solution.

In embodiments of the present disclosure, the predicted indicator values of two particles to be processed may be compared to determine a dominant solution and a dominated solution in the two particles to be processed, and the dominated solution is removed and the dominant solution is retained, so as to obtain a preset number of candidate particles.

The number of dominant solutions may also be determined after determining the dominant solutions. When the number of dominant solutions is less than or equal to the preset threshold, the determined dominant solutions may be used as candidate particles. When the number of dominant solutions is less than the preset threshold, dominant solutions may be re-determined from the dominated solutions until a total number of dominant solutions determined is the preset threshold.

When the number of dominant solutions is greater than the preset threshold, some dominant solutions may be removed based on the particle crowding degree of the particles to be processed corresponding to each dominant solution until the dominant solutions of which the total number is the preset threshold is determined. For example, the particles to be processed with a high particle crowding degree may be removed.

Specifically, according to the particle crowding degree of the particle to be processed corresponding to the dominant solution, a selection probability PPi = $p_i^2$ of each particle to be processed is calculated, and a cumulative value

$$spp_i = \sum_{j=1}^{i} pp_j$$

of the selection probability of the particle to be processed is determined, and a random number a between 0 and a total selection probability is randomly generated. If the random number a is less than or equal to $spp_i$, the particle to be processed is removed.

It may be understood that, in the above-mentioned iterative process, all the particles to be processed may be re-merged after each iteration, and the candidate particle and the target particle may be re-determined, so as to avoid an error in a single iteration process that affects an accuracy of the target particle finally determined.

The amount of data required in a process of determining the target particle may be reduced by removing redundant candidate particles by the above-mentioned method of determining the candidate particle, thereby increasing a probability of determining the target particle.

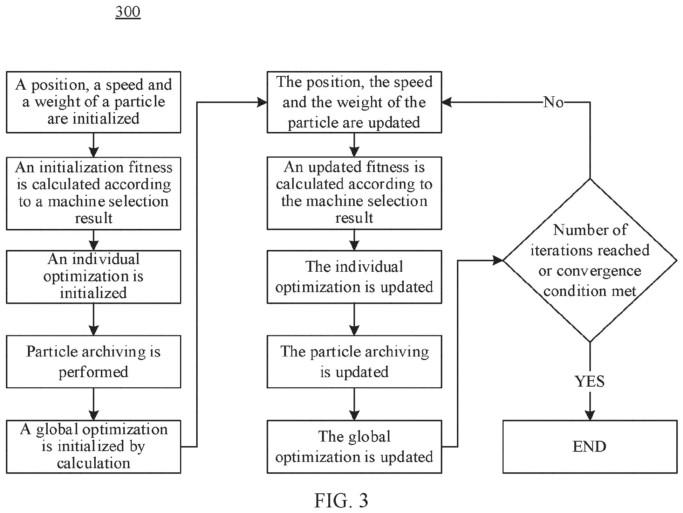

In summary, as shown in FIG. 3, the method of scheduling a production may include the following steps S301 to S310.

In the step 301, a position, a speed and a weight of a particle (i.e., a particle to be processed) are initialized.

In the step 302, an initialization fitness (i.e., a predicted indicator value) is calculated according to a machine selection result (i.e., an algorithm calculation process).

In the step 303, an individual optimization is initialized (i.e., an initial position information is determined and first position information is determined).

In the step 304, particle archiving is performed (i.e., a candidate particle is determined).

In the step 305, a global optimization is initialized by calculation (i.e., second position information is determined).

In the step 306, the position, the speed and the weight of the particle are updated.

In the step 307, an updated fitness is calculated according to the machine selection result.

In the step 308, the individual optimization is updated.

In the step 309, the particle archiving is updated.

In the step 310, the global optimization is updated, and it is determined whether the number of iterations is reached or a convergence condition is met; if the number of iterations is reached or a convergence condition is met, the process is ended; if the number of iterations is not reached or a convergence condition is not met, the process returns to the step 306.

It should be noted that the step 303, step 305 and step 307 may also be replaced with the method of determining a sampling ratio, which will not be repeated here.

In order to facilitate a better understanding of the method of scheduling a production provided by embodiments of the present disclosure, the method of scheduling a production will be better described below with reference to specific examples.

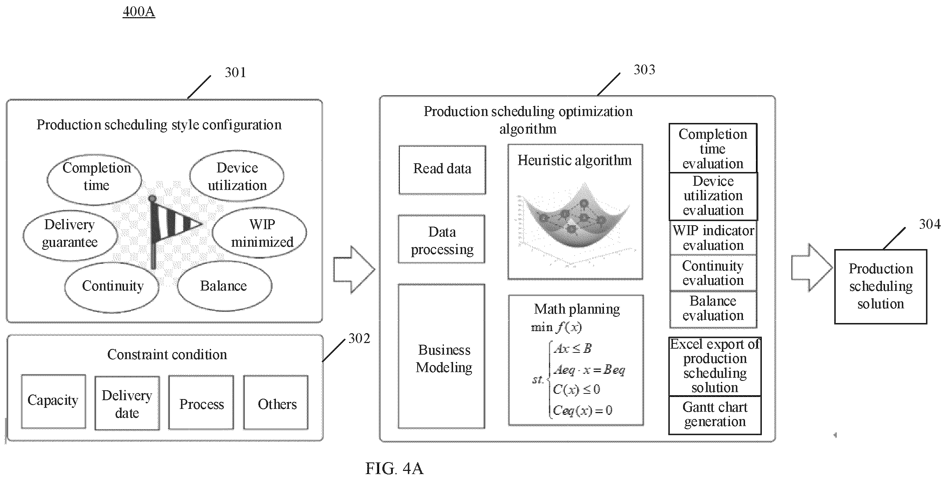

In the step 1, as shown in a production scheduling style configuration 301 and a constraint condition 302 of FIG. 4A, in an actual production scheduling process, production scheduling styles (i.e., production scheduling conditions and objectives) may be constructed according to actual production needs of different factories.

In the step 2, as shown in 303 of FIG. 4A, the configured scheduling style and constraints are input into a scheduling optimization algorithm (e.g., a heuristic algorithm or a mathematical programming algorithm), the above-mentioned method of scheduling a production is used for calculation, and the style configuration (i.e., production scheduling conditions and objectives) of each production scheduling solution (i.e., a scheduling sequence) is evaluated, such as completion time evaluation, device utilization evaluation, and WIP (work in progress) indicator evaluation.

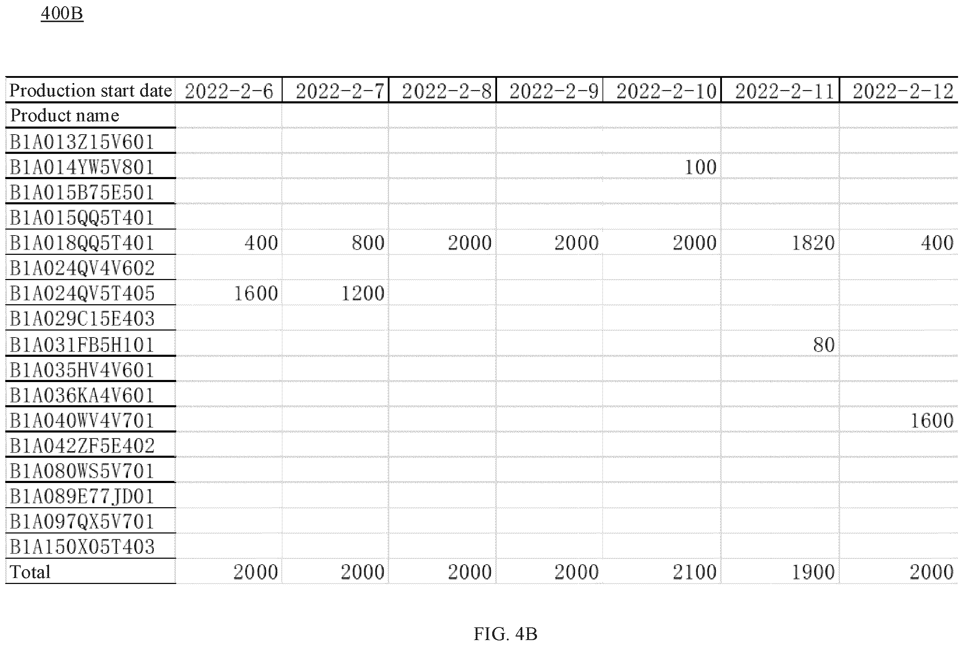

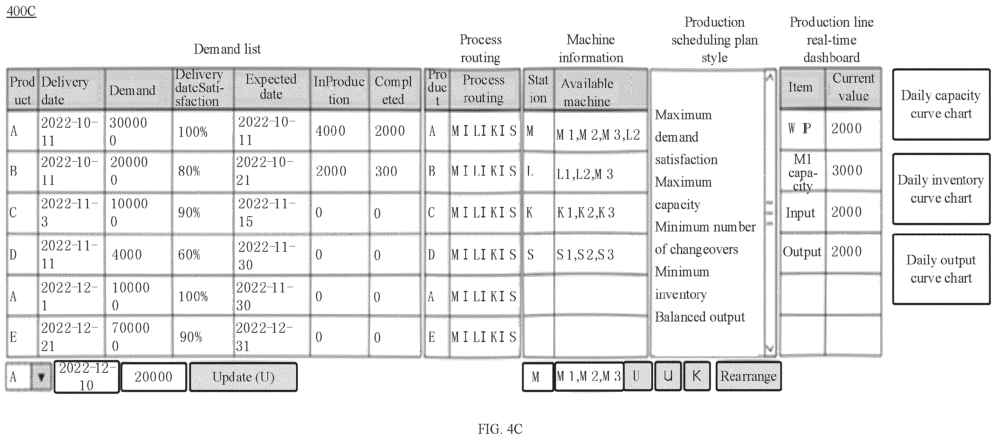

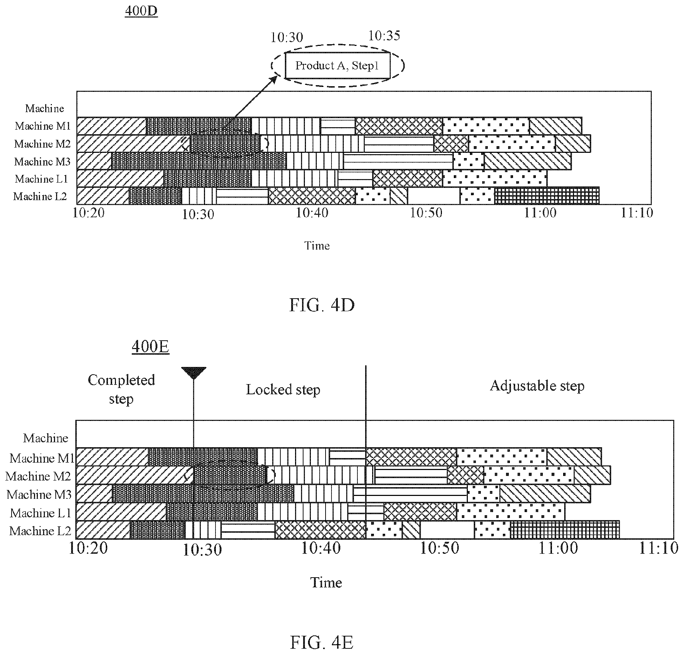

In the step 3, as shown in 304 in FIG. 4A, an optimal production scheduling solution may be selected based on an evaluation indicator and output to a user, including a daily plan (as shown in FIG. 4B or FIG. 4C) and a minute-level plan (as shown in FIG. 4D or FIG. 4E).

FIG. 4D or FIG. 4E are represented by a Gantt chart. In FIG. 4D or FIG. 4E, a horizontal axis of the Gantt chart is time (with a unit of day), a vertical axis of the Gantt chart is a machine name, each color represents a product, each long bar represents each step of the product, the left side of the long bar is start processing time, and the right side is end processing time.

A product demand table shown in FIG. 4B is in daily units, that is, a daily schedule. As shown in FIG. 4B, products that need to be produced include a product B1A013Z15V601, a product B1A014YW5V801, a product B1A015B75E501, ..., and a product B1A150X05T403. As an example, the number of products B1A015QQ5T401 that needs to be produced (i.e., processed) on February 7, 2022 is 400, the number of products B1A020QV5T405 is 1,600, and a total number of the products that need to be produced on February 7, 2022 is 2,000; the number of products B1A014YW5V801 that need to be produced on February 10, 2022 is 100, the quantity of products B1A015QQ5T401 is 2,000; a total number of the products that need to be produced on February 10, 2022 is 2,100.

The production process indication table shown in FIG. 4C represents a demand list, a process routing, machine information (i.e., information of the processing device), a production scheduling plan style (i.e., a production scheduling style), a real-time production line dashboard, a daily capacity curve chart, a daily inventory curve chart, a daily output curve chart, etc. of different products. The demand list includes indicators of delivery time, a total number of products, a delivery date satisfaction (i.e., a ratio of the number of products actually produced during the delivery time to the total number of products), predicted delivery time, the number of products put into production (i.e., the number of products being produced), the number of products completed (i.e., the number of products that have been completed), etc. The process routing is a station sequence determined based on production stages (i.e., steps) for each product. The machine information includes different stations and an available machine identifier corresponding to each station. The production scheduling plane style includes maximum demand satisfaction, maximum capacity, minimum number of changeovers, minimum inventory, and balanced output. The real-time production line dashboard is an indicator value of each production indicator determined according to actual production conditions, which specifically includes a WIP value, a capacity indicator value of a current machine, an input of a current product, an output of the current product, etc.

As shown in FIG. 4C, a product currently produced is a product A, delivery time of the product A is October 11, 2022, the number of products required to be produced is 30,000, predicted delivery time is October 11, 2022, 4,000 units have been put into production, and 2,000 units have been completed. A process routing of the product A is M→L →K→S. The product A is currently being produced at a station M based on the indicator values of each production indicator, and the machines that may perform current steps of the product A at the station M include M1, M2, M3, and L2. The WIP value of the product A is 2,000, the capacity indicator value of the currently used machine M1 is 3,000, the input of the product A is 2,000, and the output of the product A is 2,000.

It should be noted that, in an actual production process, different products may be in demand at different time periods. That is, as shown in FIG. 4C, the delivery time of the product A includes October 11, 2022 and December 1, 2022.

As shown in FIG. 4D, when a final target production scheduling sequence is determined according to different production scheduling sequences and an optional machine at each station for each production scheduling sequence, and a machine that is actually used for processing may be selected from optional machines according to production end time of the machine. The vertical axis represents different machine identifiers, and the horizontal axis represents the production end time corresponding to each machine. When the ordinate is fixed, each square represents time from production start time to production end time of a machine production current step corresponding to the ordinate. As shown in a partial enlarged view 401 shown in FIG. 4D, it is indicated that when a first step (step 1) of the product A is produced by the machine M2, the production start time is 10:30 on October 11, 2022, and the production end time is 10:35 on October 11, 2022, and so on. The final production end time of each machine may be determined, and then it is selected whether the step of the current product is processed using the machine based on a duration of the production end time of each machine.

As shown in FIG. 4E, when the product is processed by each machine, a completed step on each machine, a locked step (i.e., a preparatory work for a step to be processed has been set on the machine, and the step to be processed is about to be processed on the machine) and an adjustable step (i.e., the preparatory work for the step to be processed has not been set on the machine, and the machine for processing the step to be processed may be reselected) may be determined according to current time (i.e., a timestamp shown in 402 of FIG. 4E).

Certainly, other methods may also be used for representation. For example, after the production scheduling solution is completed, expected delivery date of each product and the quantity of products put into production as of the current date may be calculated, and a real-time capacity dashboard (real-time inventory, input, and output) and various curve charts (a daily capacity curve chart of production lines, a daily inventory curve chart, a daily output curve chart, etc.) showing the factory's production status may be generated.

A new production scheduling solution may be obtained by performing a visualization processing on the method of determining a production scheduling solution and inputting a new demand list (including a product name, delivery date, a required quantity), a process routing, machine information, a production scheduling solution style, a device maintenance plan, semi-finished product inventory data and other information, and clicking a rearrangement control (as shown in FIG. 4C).

Experiments show that, by applying the method of scheduling a production, computation time for generating a two-month minute-level production plan for the factory is 8 minutes, which is much lower than the time for manual production scheduling.

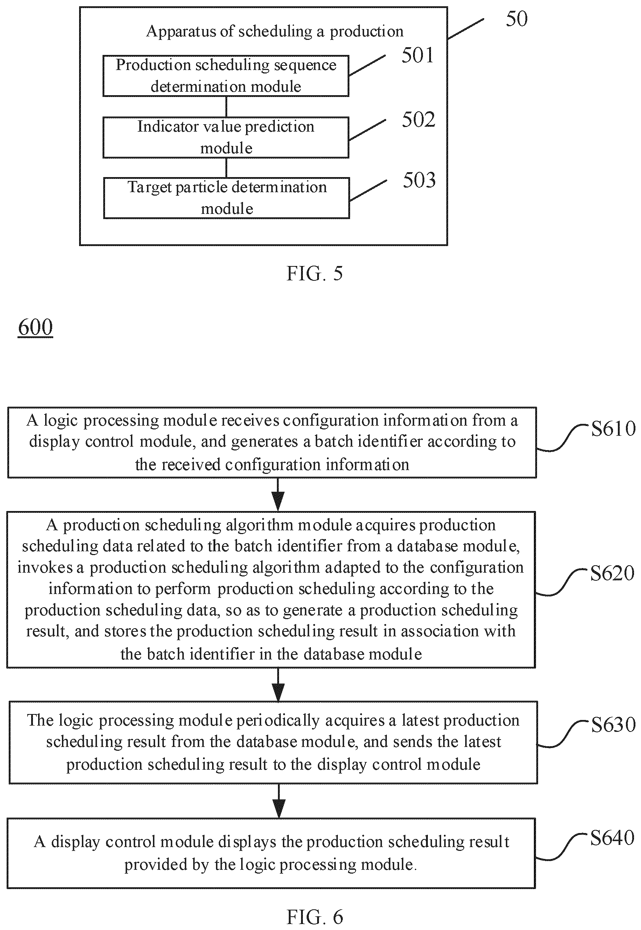

Based on the same principle as the method of scheduling a production provided by embodiments of the present disclosure, embodiments of the present disclosure further provide an apparatus of scheduling a production. As shown in FIG. 5, the apparatus 50 includes:

a production scheduling sequence determination module 501 used to determine a production scheduling sequence of at least two workpieces to be processed;

an indicator value prediction module 502 used to determine the above-mentioned production scheduling sequence as particles to be processed, and determine predicted indicator values corresponding to the particles to be processed under at least two production indicators according to device properties of the processing device; and

a target particle determination module 503 used to calculate the above-mentioned predicted indicator values according to a multi-objective particle swarm algorithm, and determine a target particle that satisfies a production scheduling condition from the above-mentioned particles to be processed according to a calculation result, where the production scheduling condition includes a target indicator value of each production indicator.

Optionally, the calculating, by the target particle determination module 503, the above-mentioned predicted indicator values according to a multi-objective particle swarm algorithm, and determining a target particle that satisfies a production scheduling condition from the above-mentioned particles to be processed according to a calculation result may include:

determining an initial position information of the above-mentioned particles to be processed in a production indicator space according to the above-mentioned predicted indicator value, where a dimension of the production indicator space is used to represent a production indicator;

determining a particle crowding degree of the above-mentioned particles to be processed in the above-mentioned production indicator space according to the above-mentioned initial position information; and

determining the above-mentioned target particle according to the above-mentioned particle crowding degree.

Optionally, the determining, by the target particle determination module 503, a particle crowding degree of the above-mentioned particles to be processed in the above-mentioned production indicator space according to the initial position information may include:

determining target speed information of the above-mentioned particles to be processed;

updating the above-mentioned initial position information according to the above-mentioned target speed information, so as to obtain updated position information; and

re-determining the above-mentioned particle crowding degree according to the above-mentioned updated position information.

Optionally, the determining, by the target particle determination module 503, target speed information of the above-mentioned particles to be processed may include:

determining first position information of the above-mentioned particles to be processed according to a comparison result of current position information and historical position information of the above-mentioned particles to be processed;

determining second position information according to a comparison result of the current position information and target position information of all the above-mentioned particles to be processed, where the above-mentioned target position information is position information of the above-mentioned target indicator value in the production indicator space; and

updating the above-mentioned target speed information according to the above-mentioned current position information, the above-mentioned first position information and the above-mentioned second position information by using a preset speed information updating method.

Optionally, the calculating, by the target particle determination module 503, the above-mentioned predicted indicator values according to a multi-objective particle swarm algorithm, and determining a target particle that satisfies a production scheduling condition from the above-mentioned particles to be processed according to a calculation result may include:

determining a target production indicator with the highest priority according to priorities of the above-mentioned at least two production indicators;

determining a sampling ratio of the above-mentioned particles to be processed according to the predicted indicator values of the above-mentioned particles to be processed under the above-mentioned target production indicator; and

sampling the above-mentioned target particle from the above-mentioned particles to be processed according to the above-mentioned sampling ratio.

Optionally, determining, by the target particle determination module 503, a sampling ratio of the above-mentioned particles to be processed according to the predicted indicator values of the above-mentioned particles to be processed under the above-mentioned target production indicator may include:

determining the minimum value among the predicted indicator values of each particle to be processed under the above-mentioned target production indicator; and

determining the sampling ratio of the above-mentioned particles to be processed according to the above-mentioned minimum value and the predicted indicator values of the above-mentioned particles to be processed under the above-mentioned target production indicator.

Optionally, the above-mentioned apparatus may further include a candidate particle determination module used to:

determine, before calculating the above-mentioned predicted indicator values according to the multi-objective particle swarm algorithm, candidate particles among the above-mentioned particles to be processed according to a comparison result of the predicted indicator values of the above-mentioned at least two particles to be processed;

where among the above-mentioned particles to be processed, predicted indicator values of the candidate particles are greater than predicted indicator values of non-candidate particles.

Optionally, the determining, by the candidate particle determination module, candidate particles among the above-mentioned particles to be processed according to a comparison result of the predicted indicator values of the above-mentioned at least two particles to be processed may include:
screening, in a case that the number of the above-mentioned candidate particles is greater than a preset threshold, particles of which the number is the preset threshold from the above-mentioned candidate particles based on the particle crowding degree of the candidate particles.
In embodiments of the present disclosure, by determining the production scheduling sequence of the at least two workpieces to be processed and the production scheduling condition including the target indicator value of each production indicator, the determined production scheduling sequence is determined as the particles to be processed, and the predicted indicator values respectively corresponding to the particles to be processed under at least two production indicators are determined according to the device properties of the processing device; and the above-mentioned predicted indicator values are calculated according to the multi-objective particle swarm algorithm, and the target particle that satisfies the production scheduling condition is determined from the particles to be processed according to the calculation result, and the production scheduling sequence that satisfies all production indicators may be quickly determined, thereby improving the production scheduling efficiency.

The apparatus of embodiments of the present disclosure may perform the method provided by embodiments of the present disclosure, and the implementation principle thereof is similar. The actions performed by each module in the apparatus of embodiments of the present disclosure correspond to the steps in the method of embodiments of the present disclosure. For the detailed functional description of each module of the apparatus, please refer to the descriptions of the corresponding method shown in the previous article, which will not be repeated here.

Based on the same principle as the method of scheduling a production and the apparatus of scheduling a production provided by embodiments of the present disclosure, embodiments of the present disclosure further provide an electronic device (e.g., a server). The electronic device may include a memory, a processor, and a computer program stored in the memory. The processor performs the steps of:

determining a production sequence of at least two workpieces to be processed;

determining the above-mentioned production scheduling sequence as particles to be processed, and determining predicted indicator values corresponding to the above-mentioned particles to be processed under at least two production indicators according to device properties of the processing device; and

calculating the above-mentioned predicted indicator values according to a multi-objective particle swarm algorithm, and determining a target particle that satisfies a production scheduling condition from the above-mentioned particles to be processed according to a calculation result, where the production scheduling condition includes a target indicator value of each production indicator.

In embodiments of the present disclosure, by determining the production scheduling sequence of the at least two workpieces to be processed and the production scheduling condition including the target indicator value of each production indicator, the determined production scheduling sequence is determined as the particles to be processed, and the predicted indicator values respectively corresponding to the particles to be processed under at least two production indicators are determined according to the device properties of the processing device; and the above-mentioned predicted indicator values are calculated according to the multi-objective particle swarm algorithm, and the target particle that satisfies the production scheduling condition is determined from the particles to be processed according to the calculation result, and the production scheduling sequence that satisfies all production indicators may be quickly determined, thereby improving the production scheduling efficiency.

FIG. 6 schematically shows a flowchart of a method of scheduling a production according to embodiments of the present disclosure.

As shown in FIG. 6, a method 600 of scheduling a production may include operations S610 to S640.

In the operation S610, a logic processing module receives configuration information from a display control module, and generates a batch identifier according to the received configuration information.

In the operation S620, a production scheduling algorithm module acquires production scheduling data related to the batch identifier from a database module, invokes a production scheduling algorithm adapted to the configuration information to perform production scheduling according to the production scheduling data, so as to generate a production scheduling result, and stores the production scheduling result in association with the batch identifier in the database module.

In the operation S630, the logic processing module periodically acquires a latest production scheduling result from the database module, and sends the latest production scheduling result to the display control module.

In the operation S640, a display control module displays the production scheduling result provided by the logic processing module.

According to embodiments of the present disclosure, the scheduling a production may refer to a process of allocating a production task to a production resource. The configuration information may be used to describe related information of a task to be scheduled. For example, the configuration information may include at least one of demand information, machine information, process routing, and production scheduling preference information. The production scheduling result may include a batch identifier and at least one Gantt chart. The batch identifier may include a unique batch number for characterizing different batches, and the batch identifier may be characterized using BatchNo. For example, the batch identifier may include at least one of production year, production month, and batch production number of a product.

The demand information may be used to characterize information related to a product in the task to be scheduled. For example, the demand information includes at least one of product identifier, product delivery date, and product demand. The process routing may be used to characterize information related to the process routing of the product in the task to be scheduled. For example, the process routing information includes a process routing of the product. The machine information may be used to characterize information related to a production step and a production device of the task to be scheduled. For example, the machine information includes the production step in the process routing and the production device available for the production step. The production scheduling preference information may be used to characterize user preference information related to the task to be scheduled, for example, the production scheduling preference information includes at least one of the following preferences: balanced output, minimum inventory, minimum number of changeovers, maximum capacity, and maximum demand satisfaction.

A database used by the database module may be set according to actual business requirements, which will not be limited here. For example, the database module may use a relational database or a non-relational database. The relational database may include at least one of: Oracle, SQLServer, Sybase, Informix, access, DB2, and mysql. The non-relational database may include at least one of: Hbase, Cassandra, SimpleDB, CouchDB, MongoDB, and Redis.

The production scheduling data may be generated based on BOM (Bill of Material) data and process routing data. Specifically, original data corresponding to the task to be scheduled may be obtained in advance, and the BOM data and the process routing data may be obtained by processing the original data. On this basis, the production scheduling data may be generated according to the BOM data and process routing data. The production scheduling data may be used to reflect an input object and an output object corresponding to each process routing in the task to be scheduled, so that a production scheduling result corresponding to the task to be scheduled may be obtained by invoking the production scheduling algorithm adapted to the configuration information to perform production scheduling according to the production scheduling data.

The production scheduling algorithm may include a mathematical programming technology-based production scheduling algorithm, an artificial intelligence technology-based production scheduling algorithm, and a simulation technology-based production scheduling algorithm. Specifically, the mathematical programming technology-based production scheduling algorithm may refer to an algorithm for establishing a production scheduling model and performing an optimization analysis. For example, the mathematical programming technology-based production scheduling algorithm may include at least one of: a linear programming-based production scheduling algorithm, an integer programming-based production scheduling algorithm, and a nonlinear programming-based production scheduling algorithm. The artificial intelligence technology-based production scheduling algorithm may refer to an algorithm for optimizing analysis and generating an optimal production plan. For example, the artificial intelligence technology-based production scheduling algorithm may include at least one of: a genetic algorithm-based production scheduling algorithm, a simulated annealing-based production scheduling algorithm, and a tabu search-based production scheduling algorithm. The simulation technology-based production scheduling algorithm may refer to an algorithm for simulating a production flow and a production scheduling solution and predicting a production progress and resource usage. For example, the simulation technology-based production scheduling algorithm may include at least one of: a discrete event simulation-based production scheduling algorithm and a continuous system simulation-based production scheduling algorithm.

The production scheduling algorithm adapted to the configuration information may be invoked, and the production scheduling is performed on the production scheduling data based on the production scheduling algorithm, so as to obtain the production scheduling result. The production scheduling result may be used to describe a process routing of at least one production device corresponding to the task to be scheduled and the production step corresponding to each process routing of at least one production device.

The method of periodically acquiring a latest production scheduling result may be set according to actual business requirements, which will not be limited here. For example, the periodic acquisition method may include a method of acquiring a production scheduling result based on a polling method and a method of acquiring a production scheduling result based on a push method.

Specifically, the polling method may include polling and long polling. In the polling method, the display control module periodically sends a request for query regardless of whether the production scheduling result is updated or not. The long polling may refer to a process of allowing a client to send a polling request and open a connection until the server generates new data available or a timeout occurs. In embodiments of the present disclosure, long polling may specifically refer to a process of allowing the display control module to send a polling request and open a connection until the logic processing module generates new data available or a timeout occurs. The result obtained by polling or long polling may include empty information or a latest updated production scheduling result.

The push method may include push. The push may refer to a communication method in which the server actively sends data to the client, and the client may establish a connection with the server. On this basis, the server sends data to the client at any time. In embodiments of the present disclosure, push may specifically refer to a process in which after the display control module establishes a connection with the logic processing module, until the production scheduling result is updated, the logic processing module may actively push an updated latest production scheduling result to the display control module. The result obtained by the push method includes the updated latest production scheduling result.

According to embodiments of the present disclosure, since the production scheduling result is obtained by the production scheduling algorithm module acquiring the production scheduling data related to the batch identifier from the database module, invoking the production scheduling algorithm adapted to the configuration information to perform production scheduling according to the production scheduling data, a more optimized production scheduling result that satisfies actual production requirements may be obtained by the logic processing module periodically acquiring the latest production scheduling result from the database module, thereby improving the production scheduling efficiency. On this basis, a mutual cooperation between the display control module, the logic processing module, the production scheduling algorithm module and the database module may help a user realize processes of generating, importing and optimizing the production scheduling result of a production order, so as to obtain the production scheduling result that both satisfies complex production requirements and improve the capacity, thereby improving the production scheduling efficiency.

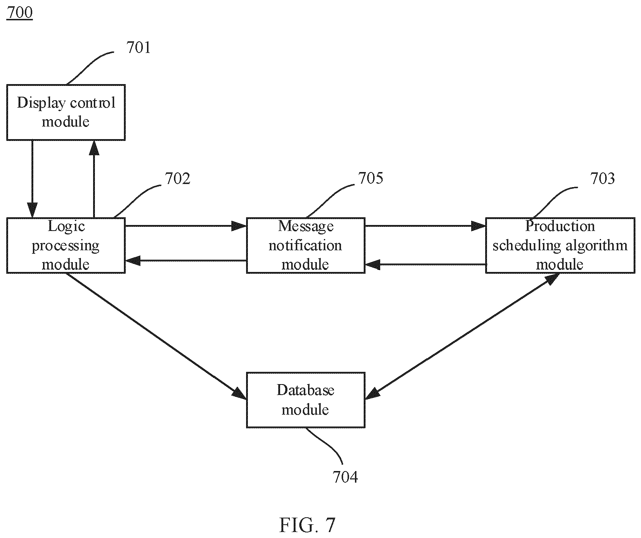

The method 600 of scheduling a production according to embodiment of the present disclosure will be further described below with reference to FIG. 7, FIG. 8, FIG. 9, FIG. 10 and FIG. 11.

FIG. 7 schematically shows a schematic architectural diagram of a system for implementing a method of scheduling a production according to embodiments of the present disclosure.

As shown in FIG. 7, in 700, a system of scheduling a production may include a display control module 701, a logic processing module 702, a production scheduling algorithm module 703 and a database module 704.

The display control module 701 may interact with the logic processing module 702. The database module 704 may interact with the production scheduling algorithm module 703. The logic processing module 702 may interact with the database module 704 and interact with the display control module 701.

Specifically, the display control module 701 may determine configuration information according to a user input, send the configuration information to the logic processing module 702, and display a production scheduling result provided by the logic processing module 702.

The logic processing module 702 may receive the configuration information from the display control module 701, and generate a batch identifier according to the received configuration information. The logic processing module 702 may also periodically acquire a latest production scheduling result from the database module 704, and send the latest production scheduling result to the display control module 701. In some embodiments, the logic processing module 702 may include a first logic processing module and a second logic processing module, the first logic processing module is used to receive the configuration information from the display control module 701, and generate the batch identifier according to the received configuration information, and the second logic processing module may be used to periodically obtain the latest production scheduling result from the database module 704, and send the latest production scheduling result to the display control module 701.

The production scheduling algorithm module 703 may acquire production scheduling data related to the batch identifier from the database module 704, invoke a production scheduling algorithm adapted to the configuration information to perform production scheduling according to the production scheduling data, so as to generate a production scheduling result, and store the production scheduling result in association with the batch identifier in the database module 704. The production scheduling algorithm module 704 may also generate a production scheduling effect chart according to the production scheduling result. For example, the production scheduling effect chart may refer to a Gantt chart. After acquiring the production scheduling result and the production scheduling effect chart, the production scheduling algorithm module 703 may store the batch identifier in association with the production scheduling result in the database module 704, and store the batch identifier in association with the production scheduling effect chart in a local storage device. For example, the storage device may refer to a hard disk.

The database module 704 may be used to store the production scheduling data related to the batch identifier, and store the batch identifier in association with the production scheduling result.

In summary, the management of a process of scheduling a production may be realized through the display control module 701, the logic processing module 702, the production scheduling algorithm module 703 and the database module 704.

According to embodiments of the present disclosure, the system of scheduling a production may further include a message notification module 705. The message notification module 705 may interact with the logic processing module 702 and interact with the production scheduling algorithm module 703.

In this case, after generating the batch identifier, the logic processing module 702 may also send the batch identifier to the message notification module 705.

The message notification module 705 may provide the batch identifier received from the logic processing module 702 to the production scheduling algorithm module 703 in a form of a message queue. The message queue (MQ) may refer to a communication mechanism for sending a message between a sender and a receiver. The message queue may store and forward a message through a message server, so that the sending and receiving of the message may be performed asynchronously without an immediate response.

The message notification module 705 may maintain a plurality of message queues. The specific number and specific purpose of the plurality of message queues may be configured according to actual business requirements, which will not be limited here. For example, the plurality of message queues may include a first message queue and a second message queue. The first message queue may be used to manage the batch identifier sent by the logic processing module 702 to the message notification module 705. The second message queue may be used to manage the batch identifier sent by the message notification module 705 to the production scheduling algorithm module 703.

For example, after the logic processing module 702 sends the batch identifier to the message notification module 705, it is possible to add the batch identifier to the first message queue. In this case, the message notification module 705 may acquire the batch identifier from the logic processing module 702 from the first message queue. Alternatively, after the message notification module 705 receives the batch identifier from the logic processing module 702, it is possible to add the batch identifier to the second message queue. In this case, the message notification module 705 may forward the batch identifier stored in the second message queue to the production scheduling algorithm module 703.

The first message queue and the second message queue may forward the batch identifiers by a subscription method. For example, the message notification module 705 may send a first identifier of the first message queue to the logic processing module 702, so as to subscribe the first message queue to the logic processing module 702. After monitoring that the logic processing module 702 sends a batch identifier to the message notification module 705, the batch identifier may be added to the first message queue, and the batch identifier in the first message queue may be sent to the message notification module 705.

The production scheduling algorithm module 703 may send a second identifier of the second message queue to the message notification module 705, so as to subscribe the second message queue to the message notification module 705. After monitoring that the message notification module 705 sends a batch identifier to the production scheduling algorithm module 703, the batch identifier may be added to the second message queue, and the batch identifier in the second message queue may be sent to the production scheduling algorithm module 703.

Batch identifiers monitored by a plurality of listening ports may be delivered to the first message queue concurrently by a plurality of first working threads, and the first message queue may store the plurality of batch identifiers. On this basis, the plurality of batch identifiers may be taken out concurrently by a plurality of second working threads so as to perform a subsequent processing flow. The plurality of first working threads and the plurality of second working threads may work independently of each other to ensure concurrency safety.

In response to a presence of a new batch identifier in the message queue, the production scheduling algorithm module 703 may acquire the production scheduling data related to the batch identifier from the database module 704, invoke the production scheduling algorithm adapted to the configuration information corresponding to the batch identifier to perform production scheduling according to the production scheduling data, so as to generate a production scheduling result, and store the production scheduling result in association with the batch identifier in the database module 704.

According to embodiments of the present disclosure, the batch identifier is cached and managed by using the message queue, thereby ensuring an orderliness of the batch identifier. In addition, since a cached batch identifier in the message queue may not be deleted before the message queue is fully cached, an integrity and security of data may be guaranteed, thereby ensuring a persistence of the production scheduling.

According to embodiments of the present disclosure, after generating the production scheduling result, the production scheduling algorithm module 703 may also send the generated production scheduling result to the message notification module 705.

The message notification module 705 may provide the production scheduling result received from the production scheduling algorithm module 703 to the logic processing module 702 in the form of the message queue. Specifically, the plurality of message queues maintained by the message notification module 705 may also include a third message queue. The third message queue may be used to manage the production scheduling result sent by the production scheduling algorithm module 703 to the logic processing module 702. For example, after the production scheduling algorithm module 703 sends the production scheduling result to the logic processing module 702, it is possible to add the production scheduling result to the third message queue. In this case, the logic processing module 702 may acquire the production scheduling result from the production scheduling algorithm module 703 from the third message queue.

The third message queue may forward the batch identifier by a subscription method. For example, the logic processing module 702 may send a third identifier of the third message queue to the production scheduling algorithm module 703, so as to subscribe the third message queue to the production scheduling algorithm module 703. After monitoring that the production scheduling algorithm module 703 sends the production scheduling result to the logic processing module 702, the production scheduling result may be added to the third message queue, and the production scheduling result in the third message queue may be sent to the logic processing module 702. The production scheduling results monitored by the plurality of monitoring ports may be delivered to the third message queue concurrently by a plurality of third working threads, and the third message queue may store the plurality of production scheduling results.

In response to a presence of a new production scheduling result in the message queue, the logic processing module 702 may send the new production scheduling result to the display control module 701. According to embodiments of the present disclosure, the plurality of message queues maintained by the message notification module 705 may also include a fourth message queue. The fourth message queue may be used to manage the production scheduling result sent by the logic processing module 702 to the display control module 701.

For example, after the logic processing module 702 sends the production scheduling result to the display control module 701, it is possible to add the production scheduling result to the fourth message queue. In this case, the display control module 701 may obtain the production scheduling result from the logic processing module 702 from the fourth message queue.

The logic processing module 702 may send a fourth identifier of the fourth message queue to the display control module 701, so as to subscribe the fourth message queue to the display control module 701. After monitoring that the logic processing module 702 sends the production scheduling result to the display control module 701, the production scheduling result may be added to the fourth message queue, and the production scheduling result in the fourth message queue may be sent to the display control module 701. On this basis, a plurality of production scheduling results may be taken out concurrently through a plurality of fourth working threads so as to perform a subsequent processing flow. The plurality of third working threads and the plurality of fourth working threads may work independently of each other to ensure a concurrent safety.

According to embodiments of the present disclosure, the production scheduling result is cached and managed by using the message queue, thereby ensuring an orderliness of the production scheduling result. In addition, since a cached production scheduling result in the message queue may not be deleted before the message queue is fully cached, an integrity and security of the data may be guaranteed, thereby ensuring a persistence of the production scheduling.

According to embodiments of the present disclosure, the production scheduling algorithm module includes a plurality of sub-modules deployed in a distributed manner, and the plurality of sub-modules respectively receive a plurality of batch identifiers from the message notification module, and each sub-module performs a production scheduling operation for a corresponding batch identifier. The production scheduling operation includes: acquiring the production scheduling data related to the batch identifier from the database module, invoking a production scheduling algorithm adapted to the configuration information corresponding to the batch identifier to perform production scheduling according to the production scheduling data, so as to generate a production scheduling result, and storing the production scheduling result in association with the batch identifier in the database module.

According to embodiments of the present disclosure, the production scheduling algorithm module may include the plurality of sub-modules deployed in a distributed manner, and each of the plurality of sub-modules may maintain a second sub-message queue. The second sub-message queue may be used to manage the batch identifier sent by the message notification module to the sub-module. For each of the plurality of sub-modules, in response to a presence of a new batch identifier in the second sub-message queue corresponding to the sub-module, production scheduling data related to the new batch identifier may be acquired from the database module, and a production scheduling algorithm adapted to the configuration information corresponding to the batch identifier may be invoked to perform production scheduling according to the production scheduling data, so as to generate a production scheduling result. On this basis, the production scheduling result may be stored in the database module in association with the batch identifier.

According to embodiments of the present disclosure, the plurality of sub-modules are deployed in a distributed manner, so that each sub-module may be used to perform the production scheduling operation for a corresponding batch identifier, so that a parallel execution of the plurality of batch identifiers may be realized, thereby improving an efficiency of scheduling a production.

According to embodiments of the present disclosure, the method of periodically acquiring a latest production scheduling result may be set according to actual business requirements, which will not be limited here. For example, the periodic acquisition method may include a method of acquiring a production scheduling result based on a polling method and a method of acquiring a production scheduling result based on a push method.

According to embodiments of the present disclosure, the periodically acquiring, by the logic processing module, a latest production scheduling result from the database module, and sending the latest production scheduling result to the display control module may include: in response to a polling request periodically sent from the display control module, acquiring the latest production scheduling result from the database module and sending the latest production scheduling result to the display control module.

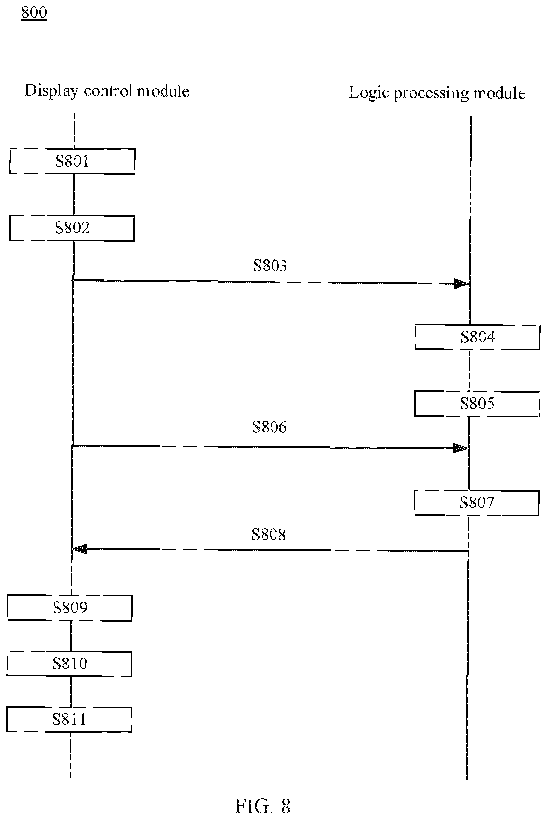

The method of acquiring a production scheduling result based on the polling method may refer to a process in which the display control module periodically sends a polling request for query regardless of whether the production scheduling result is updated or not. In this case, the latest production scheduling result may be an empty or updated latest production scheduling result. For example, the polling method may refer to a Hypertext Transfer Protocol (HTTP)-based method. A process of providing the production scheduling result to the display control module based on the polling method will be described below with reference to FIG. 8.

FIG. 8 schematically shows an example schematic diagram of a process of providing a production scheduling result to a display control module based on a polling method according to embodiments of the present disclosure.

As shown in FIG. 8, in 800, the process of providing a production scheduling result to a display control module based on a polling method may include operations S801 to S811.

In the operation S801, the display control module may store a previous production scheduling result and an associated batch identifier.

In the operation S802, the display control module may determine configuration information according to a user input.

In the operation S803, the display control module may send the determined configuration information to a logic processing module.

In the operation S804, the logic processing module may receive the configuration information from the display control module.

In the operation S805, the logic processing module may generate a batch identifier according to the received configuration information, so that the production scheduling algorithm module may store the production scheduling result in association with the batch identifier in a database module.

In the operation S806, the display control module may periodically send a polling request to the logic processing module. Specifically, periodically sending a polling request may be understood as sending a polling request every m seconds, where m is a constant. m may be set according to actual business requirements, which will not be limited here. For example, m may be set to 10.

In the operation S807, the logic processing module may obtain a latest production scheduling result from the database module. Specifically, the logic processing module may invoke a RESTful interface to obtain the latest production scheduling result from the database module.

In the operation S808, the logic processing module may send the acquired latest obtained production scheduling result to the display control module.

In the operation S809, the display control module may determine whether the batch identifier associated with the production scheduling result provided by the logic processing module is different from the batch identifier associated with the production scheduling result previously stored in the display control module. If the batch identifier associated with the production scheduling result provided by the logic processing module is different from the batch identifier associated with the production scheduling result previously stored in the display control module, it is indicated that a new production scheduling result has been generated, and then the operation S810 may be performed to update the production scheduling result. If the batch identifier associated with the production scheduling result provided by the logic processing module is the same as the production scheduling result previously stored in the display control module, it is indicated that a latest production scheduling result has not been generated, and then S810 may be skipped to perform the operation S811 to continue to display the production scheduling result previously stored.

In the operation S810, the display control module may replace the previously stored production scheduling result of the display control module with the production scheduling result provided by the logic processing module, and then the operation S811 is performed. The specific data content of the latest production scheduling result may be set according to actual business requirements, which will not be limited here. For example, the latest production scheduling result may include at least one of the latest production scheduling result data, production line status data, and device operational data.

Specifically, after receiving the current production scheduling result from the logic processing module, the display control module may determine the batch number associated with the current production scheduling result and the batch number associated with the previously stored production scheduling result. On this basis, the display control module may compare a batch number associated with the current production scheduling result and a batch number associated with the previously stored production scheduling result to obtain a comparison result. For example, when the comparison result characterizes that the batch number associated with the current production scheduling result and the batch number associated with the previously stored production scheduling result are the same, it may be considered that the latest production scheduling result has not been generated, that is, no update is required. When the comparison result characterizes that the batch number associated with the current production scheduling result is different from the batch number associated with the previously stored production scheduling result, it may be considered that the current production scheduling result is the latest production scheduling result, that is, the production scheduling result previously stored in the display control module is replaced with the current production scheduling result.

In the operation S811, the display control module may display the production scheduling result provided by the logic processing module.

According to embodiments of the present disclosure, the periodically acquiring, by the logic processing module, a latest production scheduling result from the database module, and transmitting the latest production scheduling result to the display control module may include: acquiring the latest production scheduling result from the database module at a preset time interval, and pushing the acquired production scheduling result to the display control module.

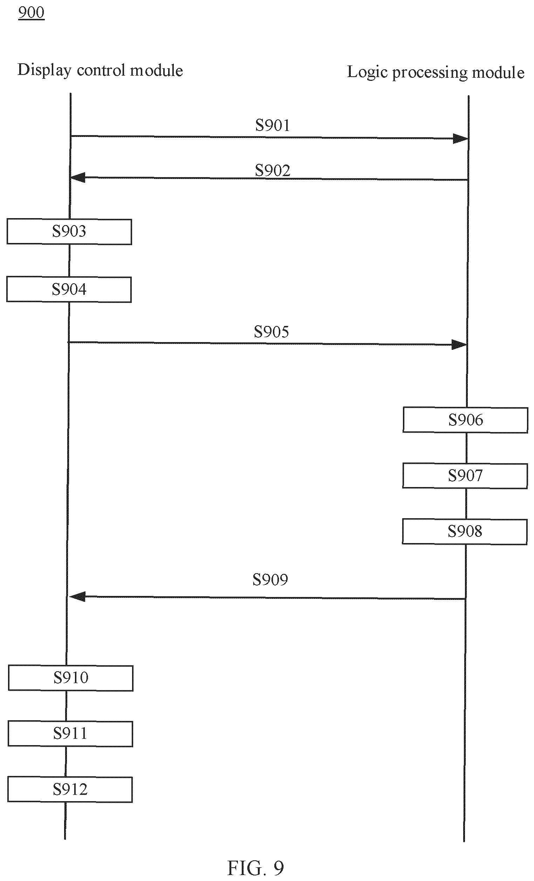

The method of acquiring a production scheduling result based on the push method may refer to a process of, after establishing a connection between the display control module and the logic processing module, keeping the connection open until the production scheduling result is updated, and the logic processing module actively pushes an updated latest production scheduling result to the display control module. In this case, the latest production scheduling result may include the updated latest production scheduling result. For example, the push method may refer to a method based on a full-duplex communication protocol (i.e., WebSocket), and may use a lightweight data format such as JSON (JavaScript Object Notation). The process of providing the production scheduling result to the display control module based on the push method will be described below with reference to FIG. 9.

FIG. 9 schematically shows an example schematic diagram of a process of providing the production scheduling result to a display control module based on a push method according to embodiments of the present disclosure.

As shown in FIG. 9, in 900, the process of providing a production scheduling result to the display control module based on the push mode may include operations S901 to S912.

In the operation S901, the display control module may send a request for establishing a communication connection to the logic processing module. For example, the communication connection may include a WebSocket long connection.

In the operation S902, the logic processing module may return a handshake in response to the connection request initiated by the display control module, thereby completing an establishment of the communication connection. The display control module and the logic processing module may perform data communication through the established communication connection.

In the operation S903, the display control module may store a previous production scheduling result and an associated batch identifier.

In the operation S904, the display control module may determine configuration information according to a user input.

In the operation S905, the display control module may send the determined configuration information to a logic processing module.

In the operation S906, the logic processing module may receive the configuration information from the display control module.

In the operation S907, the logic processing module may generate a batch identifier according to the received configuration information, so that the production scheduling algorithm module may store the production scheduling result in association with the batch identifier in a database module.

In the operation S908, the logic processing module may acquire a latest production scheduling result from the database module at a preset time interval. The preset time interval may be set according to actual business requirements, which will not be limited here. For example, the preset time interval may be understood as acquiring the latest production scheduling result from the database module every n seconds, where n is a constant. n may be set according to actual business requirements, which will not be limited here. For example, n may be set to 20.

In the operation S909, the logic processing module may push the acquired production scheduling result to the display control module.

In the operation S910, the display control module may determine whether the batch identifier associated with the production scheduling result provided by the logic processing module is different from the batch identifier associated with the production scheduling result previously stored in the display control module. If the batch identifier associated with the production scheduling result provided by the logic processing module is different from the batch identifier associated with the production scheduling result previously stored in the display control module, S911 may be performed to update the production scheduling result; otherwise, S911 may be skipped to perform S912 to continue to display the previously stored production scheduling result.

In the operation S911, the display control module may replace the previously stored production scheduling result with the display control module with the production scheduling result provided by the logic processing module.

In the operation S912, the display control module may display the production scheduling result provided by the logic processing module.

Alternatively, when the display control module does not need to continue receiving data, it is possible to actively close the communication connection with the logic processing module. In this case, a cleaning work may continue to be performed, and the cleaning work may include at least one of: releasing a resource and closing a database connection.

According to embodiments of the present disclosure, since the logic processing module may acquire the production scheduling result based on the polling method according to the polling request periodically sent by the display control module, or may acquire the production scheduling result based on the push method according to the preset time interval, through a combination of the polling method and the push method, the production scheduling result may be updated in real time, thereby improving a flexibility of applying the method of scheduling a production to various real-time monitoring and scheduling scenarios.

According to embodiments of the present disclosure, since the display control module may compare the batch identifier associated with the production scheduling result provided by the logic processing module and the batch identifier associated with the production scheduling result previously stored in the display control module before displaying the production scheduling result, it may be determined whether the production scheduling result provided by the logic processing module is the latest production scheduling result, thereby providing a real-time production scheduling plan and production data, so that the user may adjust the production scheduling plan in time, so as to improve an accuracy of scheduling a production.

According to embodiments of the present disclosure, a corresponding relationship between at least one candidate algorithm identifier and a candidate production scheduling algorithm corresponding to each of the at least one candidate algorithm identifier may be pre-configured. For example, a corresponding relationship between a candidate algorithm identifier a and a candidate production scheduling algorithm A, and a corresponding relationship between a candidate algorithm identifier b and a candidate production scheduling algorithm B may be pre-configured.

For example, the user may select the algorithm identifier a through the display control module, so that the display control module produces configuration information according to an algorithm identifier a, and sends the configuration information to the production scheduling algorithm module. After receiving the configuration information, the production scheduling algorithm module may extract the algorithm identifier a selected by the user from the configuration information. On this basis, the algorithm identifier a may be matched with at least one candidate algorithm identifier (i.e., the candidate algorithm identifier a and the candidate algorithm identifier b), so as to determine the candidate algorithm identifier a corresponding to the algorithm identifier a in at least one candidate algorithm identifier, and invoke the candidate production scheduling algorithm A corresponding to the candidate algorithm identifier a.

Specifically, the configuration information may include at least one of demand information, machine information, and process routing. A corresponding relationship between at least one candidate configuration item and a candidate production scheduling algorithm corresponding to each of the at least one candidate configuration item may be pre-configured. For example, a corresponding relationship between the demand information, the machine information, and a candidate production scheduling algorithm C, and a corresponding relationship between the demand information, the process routing, and a candidate production scheduling algorithm D may be pre-configured.

For example, the user may select configuration items of demand information and machine information through the display control module, so that the display control module produces configuration information according to the configuration items of demand information and machine information, and sends the configuration information to the production scheduling algorithm module. After receiving the configuration information, the production scheduling algorithm module may determine that the configuration items contained in the configuration information are the demand information and the machine information. On this basis, the configuration items of demand information and machine information may be matched with at least one candidate configuration item (i.e., demand information and machine information, demand information and process routing) respectively, so as to determine a candidate configuration item corresponding to the configuration items of demand information and machine information in the at least one candidate configuration item, and invoke the candidate production scheduling algorithm C corresponding to the candidate configuration items of demand information and machine information.

Specifically, the production scheduling preference information may be used to characterize a priority and a target of a production plan. Different production plans may be determined by setting different production scheduling preference information. The production scheduling preference information may include at least one of the following preferences: balanced output, minimum inventory, minimum number of changeovers, maximum capacity, and maximum demand satisfaction. A corresponding relationship between at least one candidate production scheduling preference information and a candidate production scheduling algorithm corresponding to each of the at least one candidate production scheduling preference information may be pre-configured. For example, a corresponding relationship between the balanced output, the minimum inventory and a candidate production scheduling algorithm E, and a corresponding relationship between the minimum number of changeovers, the maximum capacity and a candidate production scheduling algorithm F may be pre-configured.

For example, the user may select production scheduling preference information of balanced output and minimum inventory through the display control module, so that the display control module may produce configuration information according to the production scheduling preference information of balanced output and minimum inventory, and send the configuration information to the production scheduling algorithm module. After receiving the configuration information, the production scheduling algorithm module may determine that the production scheduling preference information included in the configuration information is the balanced output and the minimum inventory. On this basis, the production scheduling preference information of balanced output and minimum inventory may be matched with at least one candidate production scheduling preference information (i.e., balanced output and minimum inventory, minimum number of changeovers and maximum capacity) respectively, so as to determine candidate production scheduling preference information corresponding to the production scheduling preference information of balanced output and minimum inventory in the at least one candidate production scheduling preference information, and invoke the candidate production scheduling algorithm E corresponding to the candidate production scheduling preference information of balanced output and minimum inventory.

According to embodiments of the present disclosure, the production scheduling algorithm adapted to the configuration information is invoked according to one of an algorithm identifier, the configuration item or the production scheduling preference information in the configuration information, so that a flexibility of production scheduling algorithm configuration may be improved, and the method of scheduling a production may be applied to different conditions in actual production scenarios.

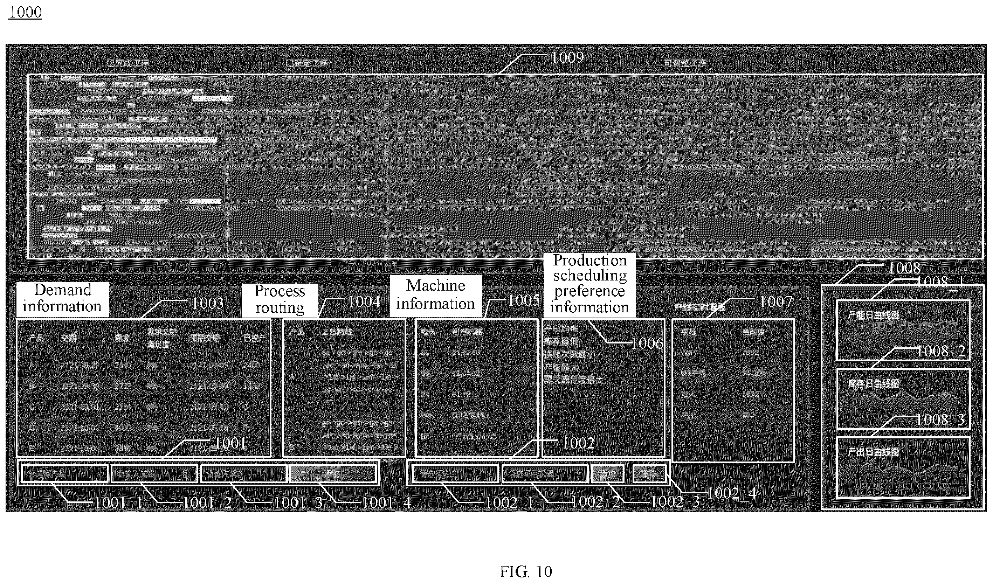

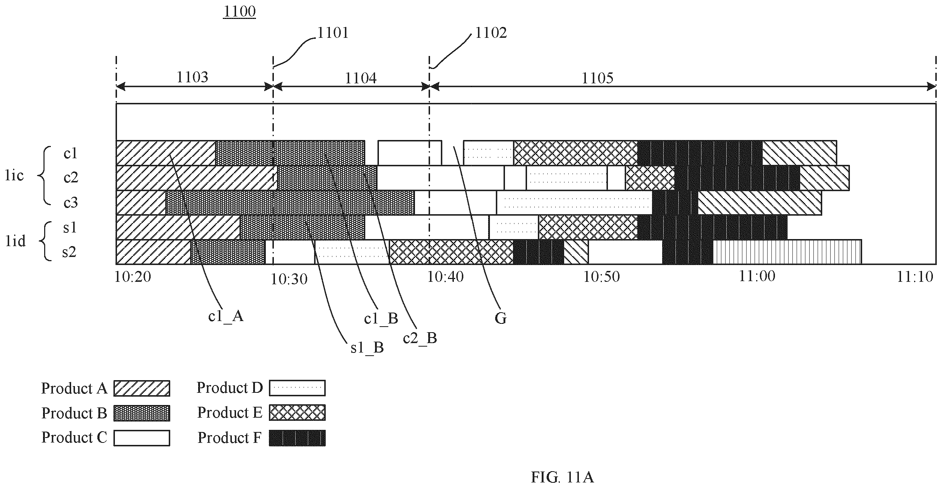

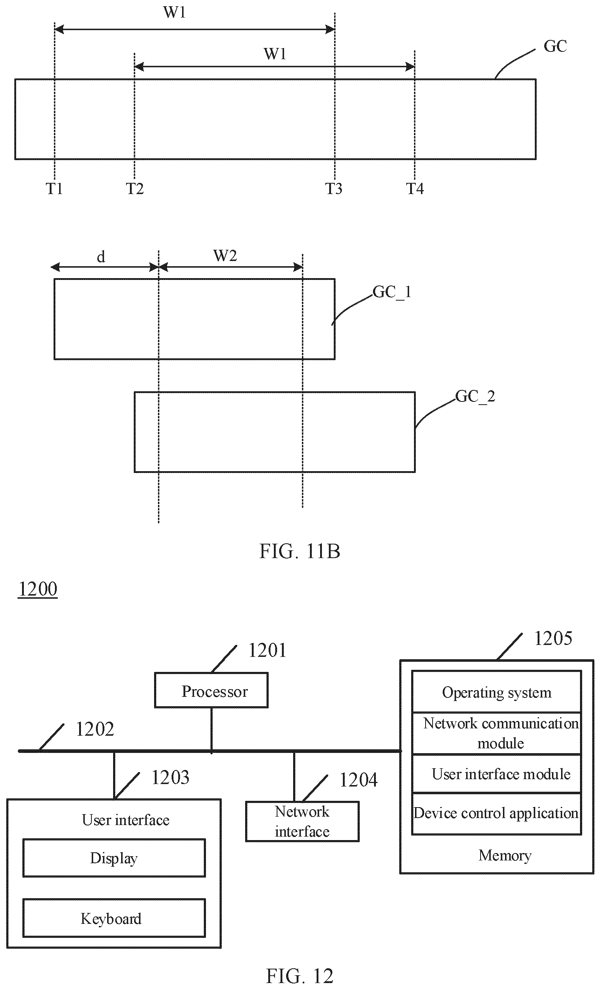

After acquiring the production scheduling result, a Gantt chart may be generated based on the production scheduling result, and a production process may be managed using the Gantt chart. The specific method of generating a Gantt chart based on the production scheduling result may be set according to actual business requirements, which will not be limited here. For example, the production scheduling result may be processed by a canvas to obtain the Gantt chart. Alternatively, the production scheduling result may be processed by a scalable vector curve graphic (SVG) to obtain the Gantt chart. Vertical axis information of the Gantt chart may be used to represent different machine information, that is, a production device used to perform a production step corresponding to the block. Horizontal axis information of the Gantt chart may be used to represent different times, that is, production time of the production step corresponding to the block, and the production time of the production process may include production start time and production end time. This will be described in detail below in combination with FIG. 10, FIG. 11A, and FIG. 11B.

FIG. 10 schematically shows an example schematic diagram of a display control interface according to embodiments of the present disclosure.

As shown in FIG. 10, the display control interface may perform a customized design and a function expansion according to different production scenarios and enterprise requirements, which may help the user complete a curve graphical information processing of an overall production status from a macro to micro perspective, while supporting production scheduling from the whole to the local to the individual.

In 1000, the display control interface may include a demand information input region 1001, a machine information input region 1002, a demand information display region 1003, a process routing display region 1004, a machine information display region 1005, a production scheduling preference information display region 1006, a production line real-time dashboard display region 1007, a production scheduling result display region 1008 and a Gantt chart display region 1009.

According to embodiments of the present disclosure, the demand information input region 1001 may include a product identifier input box 1001_1, a product delivery date input box 1001_2, a product demand quantity input box 1001_3, and a demand information addition button 1001_4. Specifically, the product identifier input box 1001_1 may be used to acquire a product identifier input by a user. The product delivery date input box 1001_2 may be used to acquire product delivery date. The acquired product delivery date may be displayed in an expected delivery date portion in the demand information display region 1003, so as to determine a demand information satisfaction in the demand information display region 1003 according to actual delivery date and the expected delivery date of the product. The product demand quantity input box 1001_3 may be used to acquire a product demand quantity. The demand information may be used to enable the user to conveniently add or modify the product delivery date and a corresponding demand quantity, so as to better manage a production plan. The user may enter, modify, and delete the product identifier, product delivery date, and product demand quantity in the display control module, so as to timely adjust the production plan to adapt to a change in market demand. The product identifier may be used to characterize different products. The product delivery date may include at least one of delivery date and predicted delivery time. The user may monitor and adjust a production progress according to the product identifier and the product delivery date, so as to ensure on-time delivery of the delivery date.

The product demand quantity may include at least one of a total number of products, the number of products put into production (i.e., the number of products being produced), and the number of products completed (i.e., the number of products that have been produced). The number of products put into production and the number of products completed may be based on real-time data in a production system, so that the user may keep abreast of a production status in a timely manner. The product delivery date may also include a delivery date satisfaction, i.e., a ratio of the number of products actually produced during the delivery time to the total number of products, which may be obtained by comparing the number of products completed and the number of products put into production. The user may know an execution situation of the production plan based on the delivery date satisfaction, and timely adjust the plan to improve the delivery date satisfaction, thereby improving customer satisfaction and corporate competitiveness.

According to embodiments of the present disclosure, the machine information input region 1002 may include a production step input box 1002_1, a production device input box 1002_2, a machine information addition button 1002_3, and a rearrangement button 1002_4. The production step input box 1002_1 may be used to acquire a production step. The production device input box 1002_2 may be used to acquire a production device. The process routing information may refer to a station sequence determined based on a production stage (i.e., a step) of each product. The process routing may refer to a logical sequence of all steps required for manufacturing of a certain product, and each step needs to be completed at a certain station. The station may refer to a physical location where a specific step is completed, which may include machines and personnel, and each machine is a specific device required for completion of a specific step. The machine information may include a production step (i.e., different stations) in a process routing and a production device (i.e., an available machine identifier corresponding to each station) available for the production step.

In a process of manufacturing a product, the process routing determines a manufacturing sequence of the product. Each step needs to be completed at a corresponding station, and each station needs to be equipped with a corresponding machine to complete the step. If the process routing, station or machine information changes, the process routing, station or machine information needs to be adjusted accordingly. If a manufacturing process of a certain product needs to be changed, or a new machine or process needs to be introduced in a certain process, the process routing needs to be updated. Timely adjustment of the process routing, station and machine information may help an enterprise better plan and manage a production flow to ensure a smooth execution of the production plan.

According to embodiments of the present disclosure, the production scheduling preference information display region 1006 may be used to display production scheduling preference information. The production scheduling preference information may include at least one of the following preferences: balanced output, minimum inventory, minimum number of changeovers, maximum capacity, and maximum demand satisfaction. The balanced output is intended to balance a production task of each workstation on a production line so as to ensure a balanced output of each part of the production line. Use of the style may improve an overall efficiency and a stability of the production line and reduce waste and bottlenecks in the production process. The minimum inventory is intended to minimize an inventory cost and avoid an excessive inventory. When it is required to control inventory, the use of the style may effectively reduce an inventory quantity, reduce an inventory cost, and improve a corporate profitability. The minimum number of changeovers is intended to reduce the number of changeovers as much as possible. When there are a plurality of products on the production line and it is required to change a device to produce another product, the use of the style may reduce the number of times of changing a device and improve a production efficiency. The maximum capacity is intended to maximize a capacity utilization rate and improve the production efficiency. When the device has excess capacity and needs to increase production, the use of the style may maximize the use of device capacity and improve the production efficiency. The maximum demand satisfaction is intended to maximize customer satisfaction. When a customer has urgent orders or orders that need to be delivered on time, the use of the style may ensure that these orders are satisfied as much as possible, thereby improving a customer satisfaction and a repeat purchase rate.

According to embodiments of the present disclosure, the production scheduling result display region 1008 may include a daily capacity curve chart display region 1008_1, a daily inventory curve chart display region 1008_2, and a daily output curve chart display region 1008_3. For example, the production scheduling result may be displayed using a line chart, so that production management personnel may understand the production situation more clearly.

The configuration information may also include a production line real-time dashboard, a daily capacity curve chart, a daily inventory curve chart, and a daily output curve chart. The production line real-time dashboard may refer to an indicator value of each production indicators determined according to actual production conditions, and may include a working in progress (WIP) value, a current machine capacity indicator value, a current product input, and a current product output.

The working in progress value may refer to the number of semi-finished products or finished products in the production process. A real-time display of the working in progress value may help the production management personnel understand a production progress and efficiency of a current production line, timely discover production bottlenecks and take measures to make an adjustment, and avoid stagnation or waste in the production line. The current machine capacity indicator value may refer to the number of products that may be produced by a main device or machine of the production line within a certain period of time. Real-time monitoring of the current machine capacity indicator value may help the production management personnel understand a production capacity of the current production line, so as to timely adjust the production scheduling solution and avoid a mismatch between the production plan and the capacity.

The current product input may refer to the number of input materials on the production line within a certain period of time. Real-time monitoring of the current product input may help the production management personnel better understand the use of raw materials, so as to realize a timely purchase when necessary to avoid a shortage of raw materials affecting the production progress. The current product output may refer to the number of finished products on the production line within a certain period of time. Real-time monitoring of the current product output may help the production management personnel timely understand the production efficiency and quality so as to optimize a production process and improve an output efficiency.

According to embodiments of the present disclosure, the daily capacity curve chart display region 1008_1 may be used to display the daily capacity curve chart. A capacity line chart may be used to characterize capacity values at different time points to help the production management personnel find a law and cause of a capacity fluctuation, so as to optimize the production plan and improve a capacity level. The daily inventory curve chart display region 1008_2 may be used to display the daily inventory curve chart. The daily inventory curve chart may be used to characterize inventories at different time points to help the production management personnel understand an inventory change trend and an inventory level, so as to make a more accurate inventory management decision. The daily output curve chart display region 1008_3 may be used to display the daily output curve chart. The daily output curve chart may be used to characterize outputs at different time points to help the production management personnel understand an output change trend and a production efficiency level, so as to optimize and improve the production efficiency.

The daily capacity curve chart, the daily inventory curve chart and the daily output curve chart may be zoomed in or out by the user, which enables the production management personnel to view data more flexibly and conduct a more detailed or more macro analysis based on different production requirements, thereby improving an efficiency and accuracy of data analysis.

According to embodiments of the present disclosure, since the display control module may determine the configuration information of at least one of the demand information, the machine information, the process routing, and the production scheduling preference information based on the user input, the user may adjust an input content by a clear and concise interface design and interactive method, thereby adjusting the production scheduling solution and resource allocation in real time. Therefore, a more comprehensive and sophisticated production scheduling optimization solution may be provided, so as to maximize a resource utilization and demand satisfaction, optimize a production scheduling management process, and improve a production efficiency and resource utilization efficiency, thereby reducing a production cost and achieving a sustainable development.

According to embodiments of the present disclosure, the Gantt chart display region 1009 may be used to display the Gantt chart. Complex data in the production process may be displayed in an intuitive chart form by designing the production scheduling result display region 1008 and the Gantt chart display region 1009 in the display control interface, so that the user may quickly know an execution situation of the production step, a machine utilization rate, a working status, etc., so as to more accurately track the production progress and bottlenecks.

FIG. 11A schematically shows an example of a Gantt chart displayed by a method of scheduling a production according to embodiments of the present disclosure.

As shown in FIG. 11A, a Gantt chart 1100 includes a plurality of blocks in a Cartesian coordinate system. For the convenience of description, only blocks c1_A, c1_B, and s1_B are marked. The plurality of blocks are arranged in a plurality of rows extending along a horizontal axis and arranged along a vertical axis. Each row of the blocks represent production steps performed by a production device, and each block in a row represents a production step. In some embodiments, a color or pattern of the block may represent a product corresponding to the step. In FIG. 11A, different patterns are used to represent different products. For the convenience of description, only six products A to F are marked. Those ordinary skilled in the art should understand that embodiments of the present disclosure are not limited thereto.

Horizontal axis information of each block in the Cartesian coordinate system represents production time of the production step corresponding to the block, and vertical axis information of each block in the Cartesian coordinate system represents a production device used to perform the production step corresponding to the block. For example, FIG. 11A shows production devices c1, c2 and c3 that may perform a production step 1ic and production devices s1 and s2 that may perform a production step 1id. For example, the block c1_A represents the production step 1ic of the product A that is performed by the production device c1 in a time period from 10:20 to 10:28; the block c1_B represents the production step 1ic of the product B that is performed by production device c1 in a time period from 10:28 to 10:36. Similarly, a block c2_B represents the production step 1ic of the product B that is performed by the production device c2 in a time period from 10:29 to 10:37; the block s1_B represents the production step 1id of the product B that is performed by the production device s1 in a time period from 10:29 to 10:36, and so on. In this way, the Gantt chart 1100 may intuitively characterize a production situation of each step of each product on different production devices. A time unit in the Gantt chart of FIG. 11A is a moment of a day. However, embodiments of the present disclosure are not limited thereto. The time unit in the Gantt chart may be set as required, for example, it may be set to date or other forms.

As shown in FIG. 11A, a gap G between the blocks may characterize that the machine is in an idle state during the period of time. The production efficiency of the factory may be evaluated by calculating an idle ratio between the plurality of blocks included in the Gantt chart and the gap in the idle state. For example, when the idle ratio is greater than or equal to a predetermined threshold, it may be determined that there are many machines in the idle state, and a capacity of the factory is not fully utilized, which may lead to a decrease in the production efficiency. Alternatively, when the idle ratio is less than a predetermined threshold, it may be determined that the production device of the factory is better utilized and the production efficiency may be higher.

According to embodiments of the present disclosure, since the horizontal axis information of each block in the Gantt chart in the Cartesian coordinate system may be used to represent the production time of the production step corresponding to the block, and the vertical axis information may represent the production device used to perform the production step corresponding to the block, the Gantt chart is generated by analyzing the generated production scheduling result, so that a manager may better understand the production situation of each step on different machines, and a utilization rate and a working saturation status of the machine, thereby improving a visualization of the production scheduling result. In addition, since the manager may make real-time adjustment and optimization of the production plan according to the Gantt chart, the production efficiency and machine utilization rate may be maximized, thereby improving a production efficiency and economic benefits.

As shown in FIG. 11A, the Gantt chart 1100 is provided with a first partition line 1101 and a second partition line 1102, the first partition line 1101 and the second partition line 1102 divide the Gantt chart 1100 into a first region 1103, a second region 1104 and a third region 1105 arranged in sequence in a horizontal axis direction, where the first partition line 1101 is located between the first region 1103 and the second region 1104, and the second partition line 1102 is located between the second region 1104 and the third region 1105.

Specifically, the first partition line 1101 represents a current moment, and the Gantt chart may be divided into the first region 1103 and the second region 1104 arranged in sequence in the horizontal axis direction through the first partition line 1101. The first region 1103 and the second region 1104 may both include a plurality of blocks. On this basis, the block in the first region 1103 may be used to characterize a completed step (i.e., a production step that has been completed), and the block in the second region 1104 may be used to characterize a locked step (i.e., a step being produced or about to be produced). Tasks in the locked step may not be modified to avoid affecting a progress and a quality of the product production. The step may be set as a locked step in a variety of ways. For example, in FIG. 11A, the production step represented by the block c2_B falls within the second region 1104, which indicates that the production step corresponding to the block is the locked step. Then, the production step represented by the block c2_B will be set to the locked step, and its corresponding data will be set to be unmodifiable. For example, if the production device corresponding to the production step represented by the block c2_B is locked to c2, the production time is locked to 10:29-10:37, and the product is locked to the product B, the user may not change the production device of the production step represented by the block c2_B from c2 to, for example, c1, or change the production time, for example, to 11:00-11:20. In some embodiments, for the production step in the second region 1104, other data related to the production step, such as material data, production volume, etc., may also be locked to prevent these data from being modified by the user and causing a production error. In some embodiments, when the user clicks on a block, data related to the production step corresponding to the block may be displayed. For a production step in an unlocked state, its related data may be displayed as modifiable; for a production step in a locked state, its related data may be displayed as unmodifiable.

The second partition line 1102 represents an earliest moment at which the production step is allowed to be adjusted. The second partition line divides the Gantt chart into the second region and the third region arranged in sequence in the horizontal axis direction. The second region and the third region may each include a plurality of blocks. On this basis, the block in the second region may be used to represent a locked step, and the block in the third region may be used to represent an adjustable step (i.e., a production step that may be freely adjusted).

According to embodiments of the present disclosure, a regional display of the completed step, locked step and adjustable step may be realized by providing the Gantt chart with the first partition line representing the current moment and the second partition line representing the earliest moment at which the production step is allowed to be adjusted, so that the user may clearly understand the production situation of each product step, thereby improving an accuracy of the production plan and the production efficiency, and thus improving a market competitiveness of the enterprise.

According to embodiments of the present disclosure, a horizontal axis in the Gantt chart 1100 may be used to represent time, a vertical axis in the Gantt chart 1100 may be used to represent the product, and each block may be used to represent the production time of the step on a specific machine.

A plurality of Gantt charts segmented in a time window with a first dimension may be pre-generated based on the generated production scheduling result, and these Gantt charts may be displayed in chronological order in a time window with a second dimension, which will be described in detail below with reference to FIG. 11B.

As shown in FIG. 11B, a Gantt chart GC generated based on the production scheduling data covers a production scheduling result spanning a relatively long period of time, such as a production scheduling result spanning several weeks or even several months, while the user usually only focus on a production scheduling result for a portion of the time period. A display of all production scheduling results to the user at the same time not only causes an unnecessary burden to the user, but also increases a burden on a computer due to large amounts of data processing and display. To this end, in embodiments of the present disclosure, the Gantt chart with a plurality of time periods are segmented in a time window with a first dimension W1, and displayed in a time window with a second dimension W2.

For example, as shown in FIG. 11B, a portion of the Gantt chart GC from moment T1 to moment T3 is segmented in the time window with a first dimension W1, so as to obtain a Gantt chart GC_1, and a portion of the Gantt chart GC from moment T2 to moment T4 is segmented in the same way, so as to obtain a Gantt chart GC_2. The Gantt charts GC_1 and GC_2 have an overlapping portion, i.e., the portion from moment T2 to moment T3.

The Gantt chart GC_1 is first displayed in the time window W2 by a method similar to FIG. 11A. In some embodiments, a temporal dimension (i.e., a second temporal dimension) of the time window W2 may be less than a temporal dimension (i.e., a first temporal dimension) of the time window W1, that is, a window used to display the Gantt chart is less than a length of the Gantt chart. In a process of displaying the Gantt chart GC_1 in the time window W2, the Gantt chart GC_1 may be moved at a preset speed. For example, in combination with FIG. 10, the Gantt chart may be moved in the horizontal axis direction relative to the partition line representing the current moment, for example, from right to left. After the Gantt chart GC_1 moves by a preset distance (e.g., a distance d), the Gantt chart GC_1 currently displayed in the time window W2 may be replaced with the Gantt chart GC_2. Then, the Gantt chart GC_2 in the time window W2 moves by the same method, and after moving by a preset distance, the Gantt chart is replaced with a next Gantt chart, and so on. Since the adjacent Gantt charts GC_1 and GC_2 have an overlapping portion, the replacement may provide the user with a visual experience of smooth transition.

The preset distance d may be determined according to a width, start time, end time and current moment of each of the plurality of Gantt charts. The preset distance d may refer to a sliding offset value of an image on a display interface. A next Gantt chart to be displayed that satisfies a predetermined condition may be selected from the plurality of Gantt charts, and when the currently displayed Gantt chart moves by a preset distance, the currently displayed Gantt chart is replaced with the next Gantt chart to be displayed, so as to realize a imperceptible sliding and switching of the Gantt chart.

According to embodiments of the present disclosure, the predetermined condition may be set according to actual business requirements, which will not be limited here. For example, the predetermined condition may be set to the current moment being greater than or equal to the start time of the Gantt chart to be displayed, and the current moment is less than or equal to a difference between the end time of the Gantt chart to be displayed and a predetermined threshold. The predetermined threshold may be set to 2 days. In this case, it may be characterized that two consecutive Gantt charts have 2-day data overlap. Since a time range corresponding to each pushed Gantt chart is different, the next Gantt chart drawn every time may move to the left compared to the previous Gantt chart, thereby realizing a sliding display of the Gantt chart.

According to embodiments of the present disclosure, since the next Gantt chart is obtained by replacing the currently displayed Gantt chart when the currently displayed Gantt chart moves by a preset distance, a time-based dynamic display of the Gantt chart may be realized by a method of dynamically moving the Gantt chart, so that the user may understand the production scheduling result more intuitively, thereby realizing visual monitoring of production scheduling management.

Referring to FIG. 12, FIG. 12 shows a schematic structural diagram of an electronic device provided by embodiments of the present disclosure. As shown in FIG. 12, an electronic device 1200 in the embodiments may include: a processor 1201, a network interface 1204 and a memory 1205. In addition, the electronic device 1200 may also include: an object interface 1203, and at least one communication bus 1202. The communication bus 1202 is used to implement the connection communication between these components. The object interface 1203 may include a display, a keyboard, and the optional object interface 1203 may also include a standard wired interface and a wireless interface. The network interface 1204 may optionally include a standard wired interface and a wireless interface (e.g., a WI-FI interface). The memory 1205 may be a high-speed RAM memory or a non-volatile memory (NVM), such as at least one disk memory. The memory 1205 may also be at least one storage device located away from the processor 1201. As shown in FIG. 12, the memory 1205 as a computer-readable storage medium may include an operating system, a network communication module, an object interface module, and a device control application.

In the electronic device 1200 shown in FIG. 12, the network interface 1204 may provide a network communication function; the object interface 1203 is mainly used to provide an input interface for an object; and the processor 1201 may be used to invoke the device control application stored in the memory 1205 to implement.

In some feasible embodiments, the above-mentioned processor 1201 is used to.

It should be understood that, in some feasible embodiments, the above-mentioned processor 1201 may be a central processing unit (CPU), and the processor may also be other general-purpose processors, a digital signal processor (DSP), an application specific integrated circuit (ASIC), a field-programmable gate array (FPGA) or other programmable logic devices, a discrete gate or transistor logic device, a discrete hardware component, etc. The general-purpose processor may be a microprocessor or the processor may also be any conventional processor, etc. The memory may include a read-only memory and a random access memory, and provide instructions and data to the processor. A portion of the memory may also include a non-volatile random access memory. For example, the memory may also store information about a device type.

In a specific implementation, the above-mentioned electronic device 1200 may perform the implementation methods provided in the steps in FIG. 1 and FIG. 6 through built-in functional modules thereof, please refer to the implementation methods provided in the above-mentioned steps for details, which will not be repeated here.

Embodiments of the present disclosure further provide a computer-readable storage medium having executable instructions stored thereon, wherein the instructions, when executed by a processor, are used to implement the methods provided by the steps in FIG. 1 and FIG. 6, please refer to the implementation methods provided by the above-mentioned steps for details, which will not be repeated here.

The above-mentioned computer-readable storage medium may be an internal storage device in the apparatus of scheduling a production or electronic device provided in any of the above-mentioned embodiments, such as a hard disk or memory of the electronic device. The computer-readable storage medium may also be an external storage device of the electronic device, such as a plug-in hard disk, a smart media card (SMC), a secure digital (SD) card, a flash card, etc. equipped on the electronic device. The above-mentioned computer-readable storage medium may also include a magnetic disk, an optical disk, a read-only memory (ROM) or a random access memory (RAM), etc. Further, the computer-readable storage medium may also include both an internal storage unit of the electronic device and an external storage device. The computer-readable storage medium is used to store the computer program and other programs and data required by the electronic device. The computer-readable storage medium may also be used to temporarily store data that has been output or is about to be output.

Embodiments of the present disclosure provide a computer program product, including a computer program. The above-mentioned computer program, when executed by a processor, is used to implement the methods provided by the steps in FIG. 1 and FIG. 6.

Terms "first", "second", etc. in the claims, the specification and the accompanying drawings of the present disclosure are used to distinguish different objects rather than to describe a specific order.

In addition, those ordinary skilled in the art may understand that, unless otherwise stated, singular forms "a", "an", "said" and "the" used herein may also include plural forms. Terms "including" and "having" and any variations thereof are intended to cover non-exclusive inclusions. For example, a process, method, system, product or electronic device that includes a series of steps or units will not be limited to the listed steps or units, but may optionally include steps or units that are not listed, or may optionally include other steps or units that are inherent to the process, method, product or electronic device.

A term "embodiments" mentioned herein means that specific features, structures or characteristics described in combination with embodiments may be included in at least one embodiment of the present disclosure. Display of the term at various locations in the specification does not necessarily refer to the same embodiment, nor is it an independent or alternative embodiment that is mutually exclusive with other embodiments. Those ordinary skilled in the art may explicitly and implicitly understand that the embodiments described herein may be combined with other embodiments. A term "and/or" used in the specification and the appended claims of the present disclosure refers to any combination of one or more of the associated listed items and all possible combinations, and includes these combinations.

Those ordinary skilled in the art may appreciate that units and algorithm steps of each example described in combination with the embodiments disclosed herein may be implemented by an electronic hardware or a computer software, or a combination of the two. In order to clearly illustrate an interchangeability of hardware and software, compositions and steps of each example have been generally described in terms of function in the above-mentioned descriptions. Those ordinary skilled in the art may implement the described functions for each specific application by using different methods, but it should not be considered that such implementation goes beyond the scope of the present disclosure.

The embodiments disclosed herein are merely preferred embodiments of the present disclosure, and should not be interpreted as limiting the scope of claims of the present disclosure. Therefore, any equivalent modifications or variations made according to the claims of the present disclosure are still within the scope of protection defined by the present disclosure.

**Claims**

1. A method of scheduling a production, comprising:

   receiving, by a logic processing module, configuration information from a display control module, and generating a batch identifier according to the received configuration information;
   acquiring, by a production scheduling algorithm module, production scheduling data related to the batch identifier from a database module, invoking a production scheduling algorithm adapted to the configuration information to perform production scheduling according to the production scheduling data, so as to generate a production scheduling result, and storing the production scheduling result in association with the batch identifier in the database module;
   periodically acquiring, by the logic processing module, a latest production scheduling result from the database module, and sending the latest production scheduling result to the display control module; and
   displaying, by the display control module, the production scheduling result provided by the logic processing module.

2. The method according to claim 1, wherein the invoking a production scheduling algorithm adapted to the configuration information comprises one of:

   extracting a user-selected algorithm identifier from the configuration information, and invoking the production scheduling algorithm corresponding to the extracted algorithm identifier;
   determining a configuration item contained in the configuration information, and invoking the production scheduling algorithm corresponding to the determined configuration item; or
   extracting production scheduling preference information from the configuration information, and invoking the production scheduling algorithm corresponding to the production scheduling preference information.

3. The method according to claim 1 or 2, further comprising: before the logic processing module generates the batch identifier according to the configuration information received from the display control module,

   determining, by the display control module, the configuration information according to a user input, and sending the determined configuration information to the logic processing module,
   wherein the configuration information includes at least one of demand information, machine information, process routing information, or production scheduling preference information, wherein the demand information comprises at least one of a product identifier, a product delivery date, and a product demand quantity, the process routing information comprises a process routing of a product, the machine information comprises a production step in the process routing and an available production device for the production step, and the production scheduling preference information comprises at least one of balanced output, minimum inventory, minimum number of changeovers, maximum capacity, and maximum demand satisfaction.

4. The method according to any one of claims 1 to 3, further comprising: generating, by the production scheduling algorithm module, a Gantt chart based on the generated production scheduling result after generating the production scheduling result,

wherein the Gantt chart comprises a plurality of blocks in a Cartesian coordinate system, the plurality of blocks are arranged in a plurality of rows extending along a horizontal axis and arranged along a vertical axis, each row of the plurality of rows represent production steps performed by a production device, and each block in said row represents one production step; and
wherein horizontal axis information of each block in the Cartesian coordinate system represents production time of the production step corresponding to the block, and vertical axis information of each block in the Cartesian coordinate system represents the production device configured to perform the production step corresponding to the block.

5. The method according to claim 4, wherein the displaying, by the display control module, the production scheduling result provided by the logic processing module comprises: displaying the Gantt chart generated based on the production scheduling result provided by the logic processing module,

wherein the Gantt chart is provided with a first partition line and a second partition line, the first partition line and the second partition line are configured to divide the Gantt chart into a first region, a second region and a third region arranged in sequence in a horizontal axis direction, wherein the first partition line is located between the first region and the second region, and the second partition line is located between the second region and the third region; and
wherein the first partition line represents a current moment, the second partition line represents an earliest moment at which the production steps are allowed to be adjusted, blocks in the first region represent completed steps, blocks in the second region represent locked steps, and blocks in the third region represent adjustable steps, wherein the locked steps are not allowed to be adjusted.

6. The method according to claim 4, wherein the production scheduling algorithm module generates a plurality of Gantt charts segmented in a time window with a first dimension based on the generated production scheduling result, and displaying the latest production scheduling result comprises:
sequentially displaying the plurality of Gantt charts in a time window with a second dimension, so that a currently displayed Gantt chart moves along the horizontal axis relative to the first partition line representing the current moment, and the currently displayed Gantt chart is replaced with a next Gantt chart when the currently displayed Gantt chart moves by a preset distance.

7. The method according to any one of claims 1 to 6, wherein the periodically acquiring, by the logic processing module, a latest production scheduling result from the database module, and sending the latest production scheduling result to the display control module comprises:

in response to a polling request sent periodically from the display control module, acquiring the latest production scheduling result from the database module and sending the latest production scheduling result to the display control module; or
acquiring the latest production scheduling result from the database module in a preset time interval, and pushing the acquired production scheduling result to the display control module.

8. The method according to any one of claims 1 to 7, further comprising:

sending, by the logic processing module, the generated batch identifier to a message notification module; and
providing, by the message notification module, the batch identifier received from the logic processing module to the production scheduling algorithm module in a form of a message queue;
wherein the production scheduling algorithm module is configured to acquire, in response to a presence of a new batch identifier in the message queue, production scheduling data related to the new batch identifier from the database module to perform the production scheduling.

9. The method according to claim 8, wherein the production scheduling algorithm module comprises a plurality of sub-modules deployed in a distributed manner, the plurality of sub-modules respectively receive a plurality of batch identifiers from the message notification module, and each of the plurality of sub-modules is configured to perform a production scheduling operation for a corresponding batch identifier, wherein the production scheduling operation comprises: acquiring the production scheduling data related to the batch identifier from the database module, invoking the production scheduling algorithm adapted to the configuration information corresponding to the batch identifier to perform the production scheduling according to the production scheduling data, so as to generate the production scheduling result, and storing the production scheduling result in association with the batch identifier in the database module.

10. The method according to any of claims 1 to 9, further comprising:

after generating the production scheduling result, sending, by the production scheduling algorithm module, the generated production scheduling result to a message notification module;
providing, by the message notification module, the production scheduling result received from the production scheduling algorithm module to the logic processing module in a form of a message queue; and
in response to a presence of a new production scheduling result in the message queue, sending, by the logic processing module, the new production scheduling result to the display control module.

11. The method according to any of claims 1 to 10, further comprising: before the display control module displays the production scheduling result provided by the logic processing module,
determining whether the batch identifier associated with the production scheduling result provided by the logic processing module is different from the batch identifier associated with the production scheduling result previously stored in the display control module, and when the batch identifier associated with the production scheduling result provided by the logic processing module is different from the batch identifier associated with the production scheduling result previously stored in the display control module, replacing the production scheduling result previously stored in the display control module with the production scheduling result provided by the logic processing module.

12. A system of scheduling a production, comprising:

a logic processing module configured to receive configuration information from a display control module, generate a batch identifier according to the received configuration information, and periodically acquire a latest production scheduling result from a database module and send the latest production scheduling result to the display control module;
a production scheduling algorithm module configured to acquire production scheduling data related to the batch identifier from the database module, invoke a production scheduling algorithm adapted to the configuration information to perform production scheduling according to the production scheduling data, so as to generate a production scheduling result, and store the production scheduling result in association with the batch identifier in the database module; and
the display control module configured to display the production scheduling result provided by the logic processing module.

13. An electronic device, comprising:

one or more processors; and
a memory configured to store one or more programs,
wherein the one or more programs, when executed by the one or more processors, are configured to cause the one or more processors to implement the method according to any one of claims 1 to 11.

14. A computer-readable storage medium having executable instructions stored thereon, wherein the instructions, when executed by a processor, are configured to cause the processor to implement the method according to any one of claims 1 to 11.

15. A computer program product comprising a computer program, wherein the computer program, when executed by a processor, is configured to implement the method according to any one of claims 1 to 11.

100

| A production scheduling sequence of at least two workpieces to be processed is determined | ⟩S110 |

| The above-mentioned production scheduling sequence is determined as particles to be processed, and predicted indicator values respectively corresponding to the particles to be processed under at least two production indicators are determined according to device properties of the processing device | ⟩S120 |

| The above-mentioned predicted indicator values are calculated according to a multi-objective particle swarm algorithm, and a target particle that satisfies a production scheduling condition is determined from the above-mentioned particles to be processed according to a calculation result, where the production scheduling condition includes a target indicator value of each production indicator | ⟩S130 |

FIG. 1

200

FIG. 2

300

```
┌─────────────────────┐        ┌─────────────────────┐
│ A position, a speed │        │ The position, the   │
│ and a weight of a   │───────▶│ speed and the       │◀───── No ────┐
│ particle are        │        │ weight of the       │             │
│ initialized         │        │ particle are updated│             │
└─────────────────────┘        └─────────────────────┘             │
         │                              │                          │
         ▼                              ▼                          │
┌─────────────────────┐        ┌─────────────────────┐             │
│ An initialization   │        │ An updated fitness  │             │
│ fitness is          │        │ is calculated       │             │
│ calculated according│        │ according to the    │             │
│ to a machine        │        │ machine selection   │      ◇──────────────◇
│ selection result    │        │ result              │     ╱  Number of      ╲
└─────────────────────┘        └─────────────────────┘    ╱ iterations reached ╲
         │                              │                 ╲ or convergence     ╱
         ▼                              ▼                  ╲ condition met     ╱
┌─────────────────────┐        ┌─────────────────────┐      ◇──────────────◇
│ An individual       │        │ The individual      │             │
│ optimization is     │        │ optimization is     │             │
│ initialized         │        │ updated             │             │
└─────────────────────┘        └─────────────────────┘           YES
         │                              │                          │
         ▼                              ▼                          ▼
┌─────────────────────┐        ┌─────────────────────┐     ┌──────────────┐
│ Particle archiving  │        │ The particle        │     │              │
│ is performed        │        │ archiving is updated │     │     END      │
└─────────────────────┘        └─────────────────────┘     │              │
         │                              │                   └──────────────┘
         ▼                              ▼
┌─────────────────────┐        ┌─────────────────────┐
│ A global            │        │ The global          │
│ optimization is     │───────▶│ optimization is     │
│ initialized by      │        │ updated             │
│ calculation         │        │                     │
└─────────────────────┘        └─────────────────────┘
```

FIG. 3

**400A**

FIG. 4A

EP 4 600 877 A1

<u>400B</u>

| Production start date | 2022-2-6 | 2022-2-7 | 2022-2-8 | 2022-2-9 | 2022-2-10 | 2022-2-11 | 2022-2-12 |
|---|---|---|---|---|---|---|---|
| Product name | | | | | | | |
| B1A013Z15V601 | | | | | | | |
| B1A014YW5V801 | | | | | 100 | | |
| B1A015B75E501 | | | | | | | |
| B1A015QQ5T401 | | | | | | | |
| B1A018QQ5T401 | 400 | 800 | 2000 | 2000 | 2000 | 1820 | 400 |
| B1A024QV4V602 | | | | | | | |
| B1A024QV5T405 | 1600 | 1200 | | | | | |
| B1A029C15E403 | | | | | | | |
| B1A031FB5H101 | | | | | | 80 | |
| B1A035HV4V601 | | | | | | | |
| B1A036KA4V601 | | | | | | | |
| B1A040WV4V701 | | | | | | | 1600 |
| B1A042ZF5E402 | | | | | | | |
| B1A080WS5V701 | | | | | | | |
| B1A089E77JD01 | | | | | | | |
| B1A097QX5V701 | | | | | | | |
| B1A150X05T403 | | | | | | | |
| Total | 2000 | 2000 | 2000 | 2000 | 2100 | 1900 | 2000 |

FIG. 4B

400C

Demand list

| Product | Delivery date | Demand | Delivery date Satisfaction | Expected date | InProduction | Completed |
|---|---|---|---|---|---|---|
| A | 2022-10-11 | 300000 | 100% | 2022-10-11 | 4000 | 2000 |
| B | 2022-10-11 | 200000 | 80% | 2022-10-21 | 2000 | 300 |
| C | 2022-11-3 | 100000 | 90% | 2022-11-15 | 0 | 0 |
| D | 2022-11-11 | 4000 | 60% | 2022-11-30 | 0 | 0 |
| A | 2022-12-1 | 100000 | 100% | 2022-11-30 | 0 | 0 |
| E | 2022-12-21 | 700000 | 90% | 2022-12-31 | 0 | 0 |

A ▼ | 2022-12-10 | 20000 | Update (U)

Process routing / Machine information

| Product | Process routing | Station | Available machine |
|---|---|---|---|
| A | M I LI KI S | M | M1,M2,M3,L2 |
| B | M I LI KI S | L | L1,L2,M3 |
| C | M I LI KI S | K | K1,K2,K3 |
| D | M I LI KI S | S | S1,S2,S3 |
| A | M I LI KI S | | |
| E | M I LI KI S | | |

M | M1,M2,M3 | U | U | K | Rearrange

Production scheduling plan style

Maximum demand satisfaction
Maximum capacity
Minimum number of changeovers
Minimum inventory
Balanced output

Production line real-time dashboard

| Item | Current value |
|---|---|
| W P | 2000 |
| M1 capacity | 3000 |
| Input | 2000 |
| Output | 2000 |

Daily capacity curve chart

Daily inventory curve chart

Daily output curve chart

FIG. 4C

EP 4 600 877 A1

400D

FIG. 4D

400E

FIG. 4E

Apparatus of scheduling a production      50

Production scheduling sequence determination module    501

Indicator value prediction module    502

Target particle determination module    503

FIG. 5

600

A logic processing module receives configuration information from a display control module, and generates a batch identifier according to the received configuration information — S610

A production scheduling algorithm module acquires production scheduling data related to the batch identifier from a database module, invokes a production scheduling algorithm adapted to the configuration information to perform production scheduling according to the production scheduling data, so as to generate a production scheduling result, and stores the production scheduling result in association with the batch identifier in the database module — S620

The logic processing module periodically acquires a latest production scheduling result from the database module, and sends the latest production scheduling result to the display control module — S630

A display control module displays the production scheduling result provided by the logic processing module. — S640

FIG. 6

700

701

Display control module

702

Logic processing module

705

Message notification module

703

Production scheduling algorithm module

704

Database module

FIG. 7

800

Display control module                    Logic processing module

S801

S802

S803

S804

S805

S806

S807

S808

S809

S810

S811

FIG. 8

900

Display control module

Logic processing module

S901

S902

S903

S904

S905

S906

S907

S908

S909

S910

S911

S912

FIG. 9

1000

已完成工序　　　　　　　已锁定工序　　　　　　　　1009　　　　　　　可调整工序

Demand information　　1003　　Process routing　　1004　　Machine information　　1005　　Production scheduling preference information　　1006　　产线实时看板　　1007

| 产品 | 交期 | 需求 | 需求交期满足度 | 预期交期 | 已投产 |
|---|---|---|---|---|---|
| A | 2121-09-29 | 2400 | 0% | 2121-09-05 | 2400 |
| B | 2121-09-30 | 2232 | 0% | 2121-09-09 | 1432 |
| C | 2121-10-01 | 2124 | 0% | 2121-09-12 | 0 |
| D | 2121-10-02 | 4000 | 0% | 2121-09-18 | 0 |
| E | 2121-10-03 | 3880 | 0% | 2121-09 | |

1001

| 产品 | 工艺路线 |
|---|---|
| A | gc->gd->gm->ge->gs->ac->ad->am->ae->as->1ic->1id->1im->1ie->1is->sc->sd->sm->se->ss |
| B | gc->gd->gm->ge->gs->ac->ad->am->ae->as->1ic->1id->1im->1ie-> |

| 站点 | 可用机器 |
|---|---|
| 1ic | c1,c2,c3 |
| 1id | s1,s4,s2 |
| 1ie | e1,e2 |
| 1im | t1,t2,t3,t4 |
| 1is | w2,w3,w4,w5 |

1002

产出均衡
库存最低
换线次数最小
产能最大
需求满足度最大

| 项目 | 当前值 |
|---|---|
| WIP | 7392 |
| M1产能 | 94.29% |
| 投入 | 1832 |
| 产出 | 880 |

1008
1008_1
产能日曲线图

1008_2
库存日曲线图

1008_3
产出日曲线图

请选择产品　　请输入交期　　请输入需求　　添加　　　请选择站点　　请选可用机器　　添加　　重排

1001_1　　1001_2　　1001_3　　1001_4　　　1002_1　　1002_2　　1002_3　　1002_4

FIG. 10

FIG. 11A

FIG. 11B

1200

FIG. 12

## INTERNATIONAL SEARCH REPORT

| International application No. |
| --- |
| **PCT/CN2023/117332** |

### A. CLASSIFICATION OF SUBJECT MATTER

G06Q 10/0631(2023.01)i

According to International Patent Classification (IPC) or to both national classification and IPC

### B. FIELDS SEARCHED

Minimum documentation searched (classification system followed by classification symbols)

IPC:G06Q 10/-

Documentation searched other than minimum documentation to the extent that such documents are included in the fields searched

Electronic data base consulted during the international search (name of data base and, where practicable, search terms used)

CNTXT, CNKI, WPABS, ENTXTC: 生产, 计划, 排程, 排产, 批次, 配置, 关联, 偏好, 算法, 工艺, 甘特图, product+, scheduling, batch, configuration, association, preference, algorithm, process, Gantt, chart

### C. DOCUMENTS CONSIDERED TO BE RELEVANT

| Category* | Citation of document, with indication, where appropriate, of the relevant passages | Relevant to claim No. |
| --- | --- | --- |
| X | CN 113344338 A (YOUHUALIN INFORMATION TECHNOLOGY (SHANGHAI) CO., LTD.) 03 September 2021 (2021-09-03) description, paragraphs 4-207, and figures 1-14 | 1-15 |
| A | CN 114037269 A (FOSHAN JIYAN ZHILIAN TECHNOLOGY CO., LTD.) 11 February 2022 (2022-02-11) entire document | 1-15 |
| A | CN 115239173 A (SHANGHAI MATHART SOFTWARE CO., LTD.) 25 October 2022 (2022-10-25) entire document | 1-15 |
| A | CN 115564266 A (ZHEJIANG UNIVERSITY OF TECHNOLOGY) 03 January 2023 (2023-01-03) entire document | 1-15 |
| A | JP 2007079663 A (JFE STEEL K.K.) 29 March 2007 (2007-03-29) entire document | 1-15 |

| ☐ Further documents are listed in the continuation of Box C. | ☑ See patent family annex. |
| --- | --- |

```
*    Special categories of cited documents:
"A"  document defining the general state of the art which is not considered
     to be of particular relevance
"D"  document cited by the applicant in the international application
"E"  earlier application or patent but published on or after the international
     filing date
"L"  document which may throw doubts on priority claim(s) or which is
     cited to establish the publication date of another citation or other
     special reason (as specified)
"O"  document referring to an oral disclosure, use, exhibition or other
     means
"P"  document published prior to the international filing date but later than
     the priority date claimed
```

```
"T"  later document published after the international filing date or priority
     date and not in conflict with the application but cited to understand the
     principle or theory underlying the invention
"X"  document of particular relevance; the claimed invention cannot be
     considered novel or cannot be considered to involve an inventive step
     when the document is taken alone
"Y"  document of particular relevance; the claimed invention cannot be
     considered to involve an inventive step when the document is
     combined with one or more other such documents, such combination
     being obvious to a person skilled in the art
"&"  document member of the same patent family
```

| Date of the actual completion of the international search | Date of mailing of the international search report |
| --- | --- |
| **16 December 2023** | **21 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
Information on patent family members

International application No.

**PCT/CN2023/117332**

| Patent document cited in search report | | | Publication date (day/month/year) | Patent family member(s) | Publication date (day/month/year) |
|---|---|---|---|---|---|
| CN | 113344338 | A | 03 September 2021 | None | |
| CN | 114037269 | A | 11 February 2022 | None | |
| CN | 115239173 | A | 25 October 2022 | None | |
| CN | 115564266 | A | 03 January 2023 | None | |
| JP | 2007079663 | A | 29 March 2007 | None | |

Form PCT/ISA/210 (patent family annex) (July 2022)

**EP 4 600 877 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310636658